(19) Europäisches Patentamt
European Patent Office
Office européen des brevets

(11) EP 3 140 331 B1

# (12) EUROPEAN PATENT SPECIFICATION

(45) Date of publication and mention of the grant of the patent:
**21.10.2020 Bulletin 2020/43**

(21) Application number: **15723620.9**

(22) Date of filing: **05.05.2015**

(51) Int Cl.:
***C08F 210/16*** *(2006.01)* ***C08F 4/6592*** *(2006.01)*
***C08J 5/18*** *(2006.01)*

(86) International application number:
**PCT/US2015/029205**

(87) International publication number:
**WO 2015/171588 (12.11.2015 Gazette 2015/45)**

## (54) HIGH PERFORMANCE MOISTURE BARRIER FILMS AT LOWER DENSITIES

HOCHLEISTUNGSFÄHIGE FEUCHTIGKEITSBARRIEREFILME BEI NIEDRIGER DICHTE

FILMS BARRIÈRES À HAUTE PERFORMANCE À DE FAIBLES DENSITÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2014 US 201461989858 P**
**15.05.2014 US 201414278303**

(43) Date of publication of application:
**15.03.2017 Bulletin 2017/11**

(73) Proprietor: **Chevron Phillips Chemical Company LP**
**The Woodlands, Texas 77380 (US)**

(72) Inventors:
- **HLAVINKA, Mark L**
  **Tulsa, Oklahoma 74114 (US)**
- **ST JEAN, Guylaine**
  **North Olmsted, Ohio 44070 (US)**
- **YANG, Qing**
  **Bartlesville, Oklahoma 74006 (US)**
- **GAGAN, Deloris R**
  **Ramona, Oklahoma 74061 (US)**

(74) Representative: **Potter Clarkson**
**The Belgrave Centre**
**Talbot Street**
**Nottingham NG1 5GG (GB)**

(56) References cited:
**WO-A1-2014/066618**
**US-A1- 2007 060 722**
**US-A1- 2010 076 167**
**US-A1- 2013 059 103**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 140 331 B1

## Description

CROSS-REFERENCE TO RELATED APPLICATIONS

The present application is a non-provisional of and claims priority to U.S. Provisional Application No. 61/989,858, filed on May 7, 2014 and entitled "High Performance Moisture Barrier Films at Lower Densities," which is incorporated by reference herein in its entirety.

FIELD

The present disclosure relates to polymer compositions, more specifically polyethylene compositions, and articles (e.g., film) made from same.

BACKGROUND

Polyolefins are plastic materials useful for making a wide variety of valued products due to their combination of stiffness, ductility, barrier properties, temperature resistance, optical properties, availability, and low cost. In particular, polyethylene (PE) is the one of the largest volume polymers consumed in the world. It is a versatile polymer that offers high performance relative to other polymers and alternative materials such as glass, metal or paper. One of the most valued polyolefin products is plastic films. Plastic films such as PE films are mostly used in packaging applications but they also find utility in the agricultural, medical, and engineering fields.

PE films are manufactured in a variety of grades that are usually differentiated by the polymer density such that PE films can be designated for example, low density polyethylene (LDPE), linear low density polyethylene (LLDPE), medium density polyethylene (MDPE), and high density polyethylene (HDPE), wherein each density range has a unique combination of properties making it suitable for a particular application.

Despite the many positive attributes of PE, the film product remains permeable to gases such as oxygen or carbon dioxide and/or moisture (e.g., water). Generally, PE films with low permeability to gases and/or moisture are manufactured from relatively high density polymer. However, these high densities limit other aspects of film performance such as impact and tear properties. Thus, an ongoing need exists for a PE film product exhibiting improved barrier properties as well as mechanical properties (e.g., impact and tear properties).

SUMMARY

According to the present invention, there is provided a metallocene-catalyzed polyethylene copolymer as defined in the appended Claim 1.

Aspects of the metallocene-catalyzed polyethylene copolymer are set out in the appended Claims 2 to 15.

DETAILED DESCRIPTION

Disclosed herein are polyethylene (PE) copolymers, PE copolymer films, and methods of making same. Such methods can comprise preparing a PE copolymer and forming the PE copolymer into a film. In an aspect, the PE copolymer when formed into a film can display improved barrier properties when compared to a PE homopolymer prepared by using an otherwise similar catalyst system, wherein the PE copolymer is characterized by a density lower than a density of the PE homopolymer.

The PE copolymers of the present disclosure can be formed using any suitable olefin polymerization method which can be carried out using various types of polymerization reactors. As used herein, "polymerization reactor" includes any polymerization reactor capable of polymerizing olefin monomers to produce homopolymers or copolymers. Such homopolymers and copolymers are referred to as resins or polymers.

The various types of reactors include those that can be referred to as batch, slurry, gas-phase, solution, high pressure, tubular, or autoclave reactors. Gas phase reactors can comprise fluidized bed reactors or staged horizontal reactors. Slurry reactors can comprise vertical or horizontal loops. High pressure reactors can comprise autoclave or tubular reactors. Reactor types can include batch or continuous processes. Continuous processes could use intermittent or continuous product discharge or transfer. Processes can also include partial or full direct recycle of un-reacted monomer, un-reacted comonomer, catalyst, co-catalyst and/or diluent.

Polymerization reactor systems of the present disclosure can comprise one type of reactor in a system or multiple reactors of the same or different type. Production of polymers in multiple reactors can include several stages in at least two separate polymerization reactors interconnected by a transfer device making it possible to transfer the polymers resulting from a first polymerization reactor into a second reactor. The desired polymerization conditions in

one of the reactors can be different from the operating conditions of the other reactors. Alternatively, polymerization in multiple reactors can include the manual or automatic transfer of polymer from one reactor to subsequent reactors for continued polymerization. Multiple reactor systems can include any combination including, but not limited to, multiple loop reactors, multiple gas reactors, a combination of loop and gas reactors, multiple high pressure reactors, or a combination of high pressure with loop and/or gas reactors. The multiple reactors can be operated in series or in parallel.

According to one aspect of the disclosure, the polymerization reactor system can comprise at least one loop slurry reactor comprising vertical and/or horizontal loops. Monomer, diluent, catalyst and comonomer can be continuously fed to a loop reactor where polymerization occurs. Generally, continuous processes can comprise the continuous introduction of a monomer, a catalyst, comonomer and a diluent into a polymerization reactor and the continuous removal from this reactor of a suspension comprising polymer particles and the diluent. Reactor effluent can be flashed to separate the solid polymer from the liquids that comprise the diluent, monomer and co-monomer. Various technologies can be used for this separation step including but not limited to, flashing that can include any combination of heat addition and pressure reduction; separation by cyclonic action in either a cyclone or hydrocyclone; or separation by centrifugation.

A suitable slurry polymerization process (also known as the particle form process) is disclosed, for example, in U.S. Patent Nos. 3,248,179; 4,501,885; 5,565,175; 5,575,979; 6,239,235; 6,262,191; and 6,833,415.

Suitable diluents used in slurry polymerization include, but are not limited to, the monomer being polymerized and hydrocarbons that are liquids under reaction conditions. Examples of suitable diluents include, but are not limited to, hydrocarbons such as propane, cyclohexane, isobutane, n-butane, n-pentane, isopentane, neopentane, and n-hexane. Some loop polymerization reactions can occur under bulk conditions where no diluent is used. An example is polymerization of propylene monomer as disclosed in U.S. Patent No. 5,455,314.

According to yet another aspect of this disclosure, the polymerization reactor can comprise at least one gas phase reactor. Such systems can employ a continuous recycle stream containing one or more monomers continuously cycled through a fluidized bed in the presence of the catalyst under polymerization conditions. A recycle stream can be withdrawn from the fluidized bed and recycled back into the reactor. Simultaneously, polymer product can be withdrawn from the reactor and new or fresh monomer can be added to replace the polymerized monomer. Such gas phase reactors can comprise a process for multi-step gas-phase polymerization of olefins, in which olefins are polymerized in the gaseous phase in at least two independent gas-phase polymerization zones while feeding a catalyst-containing polymer formed in a first polymerization zone to a second polymerization zone. Gas phase reactors are disclosed in U.S. Patent Nos. 4,588,790; 5,352,749; and 5,436,304.

According to still another aspect of the disclosure, a high pressure polymerization reactor can comprise a tubular reactor or an autoclave reactor. Tubular reactors can have several zones where fresh monomer, initiators, or catalysts are added. Monomer can be entrained in an inert gaseous stream and introduced at one zone of the reactor. Initiators, catalysts, and/or catalyst components can be entrained in a gaseous stream and introduced at another zone of the reactor. The gas streams can be intermixed for polymerization. Heat and pressure can be employed appropriately to obtain optimal polymerization reaction conditions.

According to yet another aspect of the disclosure, the polymerization reactor can comprise a solution polymerization reactor wherein the monomer is contacted with the catalyst composition by suitable stirring or other means. A carrier comprising an inert organic diluent or excess monomer can be employed. If desired, the monomer can be brought in the vapor phase into contact with the catalytic reaction product, in the presence or absence of liquid material. The polymerization zone is maintained at temperatures and pressures that will result in the formation of a solution of the polymer in a reaction medium. Agitation can be employed to obtain better temperature control and to maintain uniform polymerization mixtures throughout the polymerization zone. Adequate means are utilized for dissipating the exothermic heat of polymerization.

Polymerization reactors suitable for the present disclosure can further comprise any combination of at least one raw material feed system, at least one feed system for catalyst or catalyst components, and/or at least one polymer recovery system. Suitable reactor systems for the present disclosure can further comprise systems for feedstock purification, catalyst storage and preparation, extrusion, reactor cooling, polymer recovery, fractionation, recycle, storage, loadout, laboratory analysis, and process control.

Conditions (e.g., polymerization conditions) that are controlled for polymerization efficiency and to provide resin properties include temperature, pressure, time, and concentrations of various reactants. Polymerization temperature can affect catalyst productivity, polymer molecular weight and molecular weight distribution. Suitable polymerization temperature can be any temperature below the de-polymerization temperature according to the Gibbs free energy equation. Typically, this includes from about 60 °C to about 280 °C, for example, and from about 70 °C to about 110 °C, depending upon the type of polymerization reactor.

Suitable pressures will also vary according to the reactor and polymerization type. The pressure for liquid phase polymerizations in a loop reactor is typically less than 1,000 psig. Pressure for gas phase polymerization is usually at about 200 psig to about 500 psig. High pressure polymerization in tubular or autoclave reactors is generally run at about 20,000 psig to about 75,000 psig. Polymerization reactors can also be operated in a supercritical region occurring at

generally higher temperatures and pressures. Operation above the critical point of a pressure/temperature diagram (supercritical phase) can offer advantages.

The concentration of various reactants can be controlled to produce resins with certain physical and mechanical properties. The proposed end-use product that will be formed by the resin and the method of forming that product determines the desired resin properties. Mechanical properties include tensile, flexural, impact, creep, stress relaxation, and hardness tests. Physical properties include density, molecular weight, molecular weight distribution, melting temperature, glass transition temperature, temperature melt of crystallization, density, stereoregularity, crack growth, short chain branching, long chain branching and rheological parameters.

The concentrations of monomer, comonomer, hydrogen, co-catalyst, modifiers, and electron donors can be utilized in producing these resin properties. Comonomer can be used to control product density. Hydrogen can be used to control product molecular weight. Co-catalysts can be used to alkylate, scavenge poisons and/or control molecular weight. Modifiers can be used to control product properties and electron donors affect stereoregularity. In addition, the concentration of poisons can be minimized because poisons can impact the reactions and product properties. In an embodiment, hydrogen is added to the reactor during polymerization. Alternatively, hydrogen is not added to the reactor during polymerization.

The polymer or resin (e.g., PE copolymer) can be formed into various articles, including, but not limited to pipes, bottles, toys, containers, utensils, film products, drums, tanks, membranes, and liners. Various processes can be used to form these articles, including, but not limited to, film blowing and cast film, blow molding, extrusion molding, rotational molding, injection molding, fiber spinning, thermoforming, cast molding, and the like. After polymerization, additives and modifiers can be added to the polymer to provide better processing during manufacturing and for desired properties in the end product. Additives include surface modifiers such as slip agents, antiblocks, tackifiers; antioxidants such as primary and secondary antioxidants; pigments; processing aids such as waxes/oils and fluoroelastomers; and special additives such as fire retardants, antistats, scavengers, absorbers, odor enhancers, and degradation agents.

The PE copolymer can include other suitable additives. Such additives can be used singularly or in combination and can be included in the copolymer composition before, during or after preparation of the PE copolymer as described herein. Such additives can be added via known techniques, for example during an extrusion or compounding step such as during pelletization or subsequent processing into an end use article. Herein the disclosure will refer to a PE copolymer although a copolymer composition comprising the PE copolymer and one or more additives is also contemplated.

Any catalyst composition capable of producing a PE copolymer of the type disclosed herein can be employed in the production of the copolymer. In an embodiment, a method of preparing a PE copolymer comprises contacting an ethylene monomer and an alpha-olefin comonomer with a catalyst system in a polymerization reactor system under polymerization conditions to produce a polyethylene copolymer.

In an embodiment, the catalyst system comprises a single metallocene compound. Herein, the term "metallocene" describes a compound comprising at least one $\eta^3$ to $\eta^5$-cycloalkadienyl-type moiety, wherein $\eta^3$ to $\eta^5$-cycloalkadienyl moieties include cyclopentadienyl ligands, indenyl ligands, fluorenyl ligands, and the like, including partially saturated or substituted derivatives or analogs of any of these. Possible substituents on these ligands include hydrogen, therefore the description "substituted derivatives thereof" in this disclosure comprises partially saturated ligands such as tetrahydroindenyl, tetrahydrofluorenyl, octahydrofluorenyl, partially saturated indenyl, partially saturated fluorenyl, substituted partially saturated indenyl, substituted partially saturated fluorenyl, and the like.

In an embodiment, a catalyst composition for the production of a PE copolymer of the type disclosed herein can comprise a single metallocene compound; an activator-support, and an organoaluminum compound. In some aspects of the present disclosure, the single metallocene compound comprises a tightly-bridged ansa-metallocene compound (e.g., a bridged metallocene compound). In other aspects of the present disclosure, the single metallocene compound comprises an unbridged metallocene compound.

In an embodiment, the metallocene comprises an unbridged metallocene compound, designated MTE-A. In an embodiment, the unbridged metallocenes can comprise bis($\eta^5$-cycloalkadienyl)-type compounds, wherein the $\eta^5$-cycloalkadienyl portions include substituted cyclopentadienyl ligands, substituted indenyl ligands, substituted fluorenyl ligands, and the like. As will be appreciated by one of skill in the art, and with the help of this disclosure, unbridged metallocenes have structures similar to the ansa-metallocenes, but lack the bridging group.

In one aspect of the present disclosure, the unbridged metallocene compound can be characterized by general formula:

$$(X^1)(X^2)(X^3)(X^4)M^1;$$

wherein ($X^1$) and ($X^2$) are independently a cyclopentadienyl, indenyl, substituted cyclopentadienyl or a substituted indenyl, each substituent on ($X^1$) and ($X^2$) is independently selected from a linear or branched alkyl group, or a linear or branched alkenyl group, wherein the alkyl group or alkenyl group is unsubstituted or substituted, any substituent on ($X^1$) and ($X^2$) having from 1 to about 20 carbon atoms; ($X^3$) and ($X^4$) are independently an aliphatic group, an aromatic group, a cyclic

group, a combination of aliphatic and cyclic groups, or a substituted derivative thereof, having from 1 to about 20 carbon atoms; or a halide, and $M^1$ is Zr or Hf.

In an embodiment, MTE-A is a nonbridged metallocene. Nonlimiting examples of compounds suitable for use in this disclosure as MTE-A are represented by structures (1)-(13):

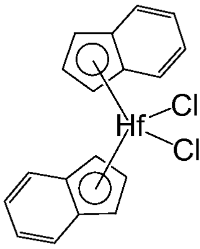
(1)
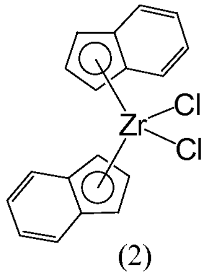
(2)
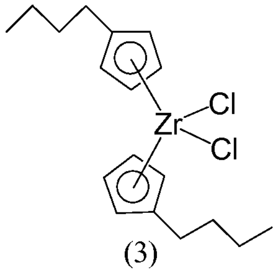
(3)
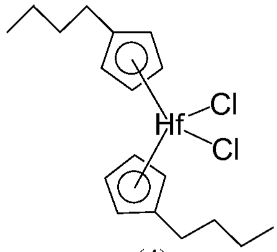
(4)
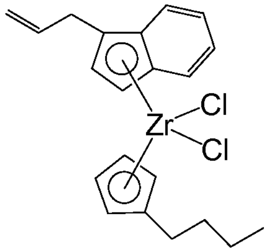
(5)
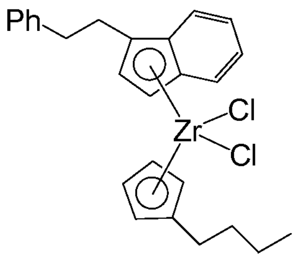
(6)
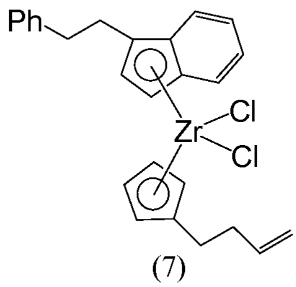
(7)
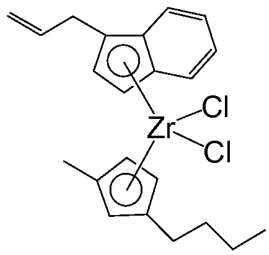
(8)
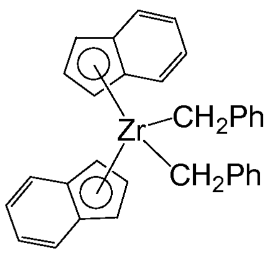
(9)
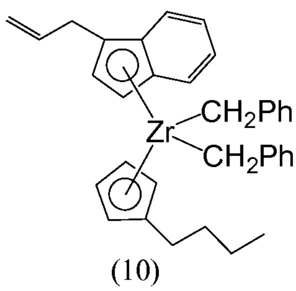
(10)
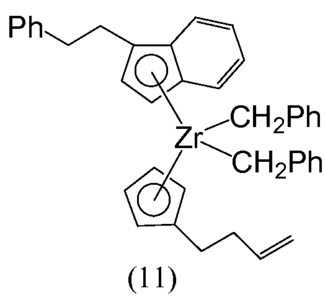
(11)
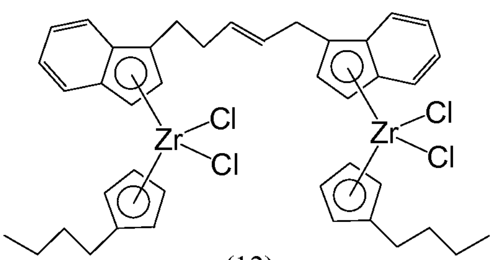
(12)
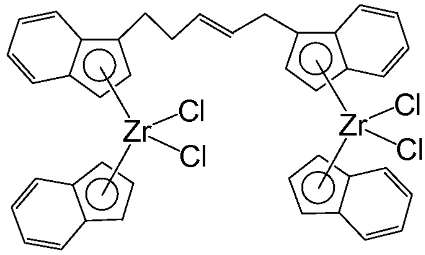
(13)

In an embodiment, the metallocene comprises a tightly-bridged ansa-metallocene compound, designated MTE-B, comprising an olefin-containing moiety bonded to a cyclopentadienyl-type ligand and at least one aryl group bonded to the bridging atom of the bridging ligand. As used herein, the term bridged or ansa-metallocene refers simply to a metallocene compound in which the two $\eta^5$-cycloalkadienyl-type ligands in the molecule are linked by a bridging moiety. Useful ansa-metallocenes are typically "tightly-bridged," meaning that the two $\eta^5$-cycloalkadienyl-type ligands are connected by a bridging group wherein the shortest link of the bridging moiety between the $\eta^5$-cycloalkadienyl-type ligands is a single atom. Thus, the length of the bridge or the chain between the two $\eta^5$-cycloalkadienyl-type ligands is one atom,

although this bridging atom is substituted. The ansa-metallocenes of this disclosure are therefore bridged bis($\eta^5$-cycloalkadienyl)-type compounds, wherein the $\eta^5$-cycloalkadienyl portions include substituted cyclopentadienyl ligands, substituted indenyl ligands, substituted fluorenyl ligands, and the like, wherein one substituent on these cyclopentadienyl-type ligands is a bridging group having the formula $ER^1R^2$, wherein E is a carbon atom, a silicon atom, a germanium atom, or a tin atom, and wherein E is bonded to both cyclopentadienyl-type ligands. In this aspect, $R^1$ and $R^2$ can be independently selected from an alkyl group or an aryl group, either of which having up to 12 carbon atoms, or hydrogen.

In one aspect of the present disclosure, the ansa-metallocene compound can be characterized by general formula:

$$(X^5R^3)(X^6R^4{}_2)(X^7)(X^8)M^2;$$

wherein ($X^5$) is cyclopentadienyl, indenyl, or fluorenyl, ($X^6$) is fluorenyl, and ($X^3$) and ($X^6$) are connected by a disubstituted bridging group comprising one atom bonded to both ($X^5$) and ($X^6$), wherein the atom is carbon or silicon. A first substituent of the disubstituted bridging group is an aromatic or aliphatic group having from 1 to about 20 carbon atoms. A second substituent of the disubstituted bridging group can be an aromatic or aliphatic group having from 1 to about 20 carbon atoms, or the second substituent of the disubstituted bridging group is an unsaturated aliphatic group having from 3 to about 10 carbon atoms. $R^3$ is H, or an unsaturated aliphatic group having from 3 to about 10 carbon atoms. $R^4$ is H, an alkyl group having from 1 to about 12 carbon atoms, or an aryl group; ($X^7$) and ($X^8$) are independently an aliphatic group, an aromatic group, a cyclic group, a combination of aliphatic and cyclic groups, or a substituted derivative thereof, having from 1 to about 20 carbon atoms, or a halide; and $M^2$ is Zr or Hf. The first substituent of the disubstituted bridging group can be a phenyl group. The second substituent of the disubstituted bridging group can be a phenyl group, an alkyl group, a butenyl group, a pentenyl group, or a hexenyl group.

In an embodiment, MTE-B is a bridged metallocene compound. Nonlimiting examples of compounds suitable for use in this disclosure as MTE-B are represented by structures (14)-(29):

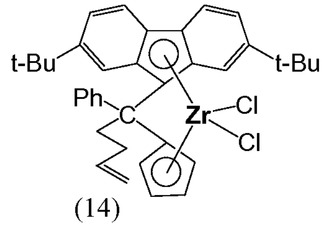
(14)

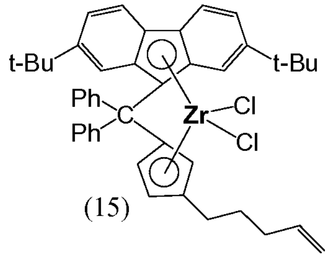
(15)

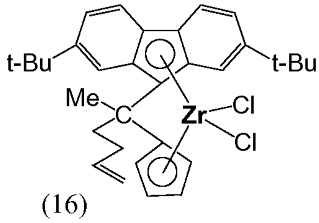
(16)

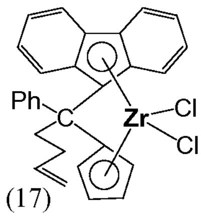
(17)

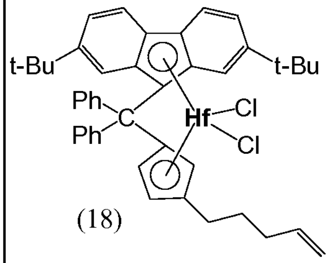
(18)

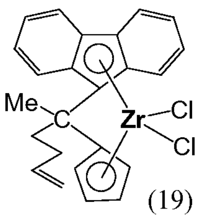
(19)

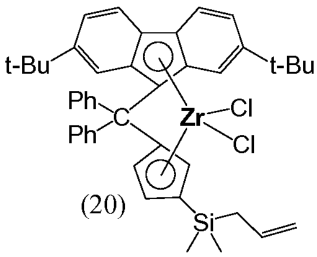
(20)

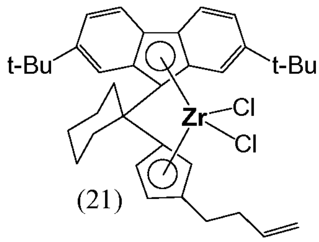
(21)

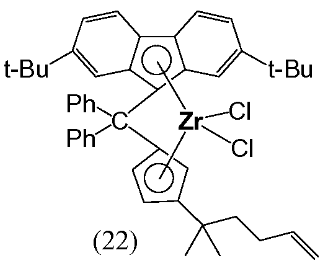
(22)

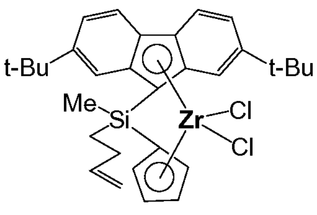
(23)

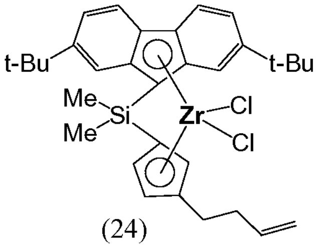
(24)

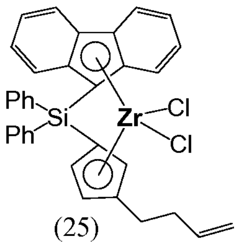
(25)

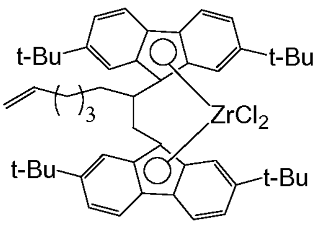
(26)

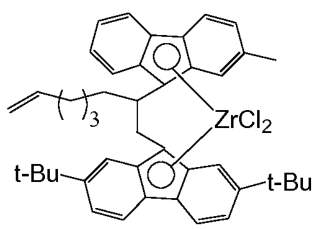
(27)

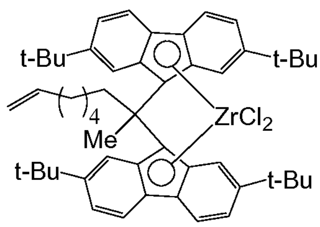
(28)

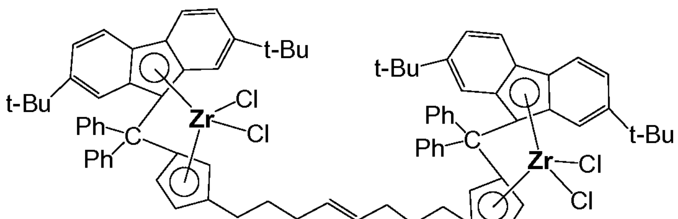
(29)

A metallocene compound suitable for use in the present disclosure can display a positive hydrogen response. Herein, a positive hydrogen response refers to a lowering of the molecular weight. Examples of metallocene compounds suitable for use in the present disclosure are described in more detail in U.S. Patent Nos. 7,064,225; 7,226,886; 7,312,283; and 7,517,939.

In an embodiment, the metallocene compound can be chosen from compounds like those represented by structures (5) and (16):

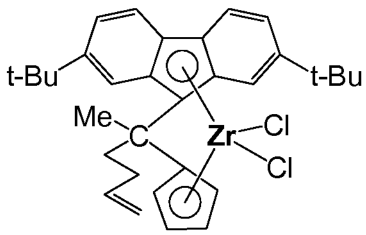

(16)

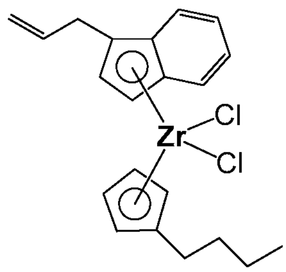

(5)

In one aspect, the activator-support comprises a chemically-treated solid oxide support. Alternatively, the activator-support can comprise a clay mineral, a pillared clay, an exfoliated clay, an exfoliated clay gelled into another oxide matrix, a layered silicate mineral, a non-layered silicate mineral, a layered aluminosilicate mineral, a non-layered aluminosilicate mineral, or any combination thereof. The term "support" is not meant to be construed as an inert component of the catalyst composition, but rather is to be considered an active part of the catalyst composition, because of its intimate association with the metallocene component.

Generally, chemically-treated solid oxides exhibit enhanced acidity as compared to the corresponding untreated solid oxide compounds. The chemically-treated solid oxide can also function as a catalyst activator as compared to the corresponding untreated solid oxide. While the chemicaily-treated solid oxide activates the metallocene(s) in the absence of co-catalysts, it is not necessary to eliminate co-catalysts from the catalyst composition. The activation function of the activator-support is evident in the enhanced activity of catalyst composition as a whole, as compared to a catalyst composition containing the corresponding untreated solid oxide. However, it is believed that the chemically-treated solid oxide can function as an activator, even in the absence of an organoaluminum compound, aluminoxanes, organoboron or organoborate compounds, ionizing ionic compounds, and the like.

The chemically-treated solid oxide can comprise a solid oxide treated with an electron-withdrawing anion. Without wishing to be limited by theory, it is believed that treatment of the solid oxide with an electron-withdrawing component augments or enhances the acidity of the oxide. Thus, either the activator-support exhibits Lewis or Bronsted acidity that is typically greater than the Lewis or Brønsted acid strength of the untreated solid oxide, or the activator-support has a greater number of acid sites than the untreated solid oxide, or both. One method to quantify the acidity of the chemically-treated and untreated solid oxide materials is by comparing the polymerization activities of the treated and untreated oxides under acid catalyzed reactions.

Chemically-treated solid oxides of this disclosure are formed generally from an inorganic solid oxide that exhibits Lewis acidic or Brønsted acidic behavior and has a relatively high porosity. The solid oxide is chemically-treated with an electron-withdrawing component, typically an electron-withdrawing anion, to form an activator-support.

In an embodiment, the solid oxide suitable for use in the present disclosure to prepare the chemically-treated solid oxide can be characterized by a pore volume of greater than about 0.1 cc/g, alternatively greater than about 0.5 cc/g, or alternatively greater than about 1.0 cc/g.

In an embodiment, the solid oxide suitable for use in the present disclosure to prepare the chemically-treated solid oxide can be characterized by a surface area of from about 100 $m^2/g$ to about 1000 $m^2/g$, alternatively from about 200 $m^2/g$ to about 800 $m^2/g$, or alternatively from about 250 $m^2/g$ to about 600 $m^2/g$.

In an embodiment, the chemically-treated solid oxide can comprise a solid inorganic oxide comprising oxygen and one or more elements selected from Group 2, 3, 4, 5, 6, 7, 8, 9, 10, 11, 12, 13, 14, or 15 of the periodic table, or comprising oxygen and one or more elements selected from the lanthanide or actinide elements (See: Hawley's Condensed Chemical Dictionary, 11th Ed., John Wiley & Sons, 1995; Cotton, F.A., Wilkinson, G., Murillo, C. A., and Bochmann, M., Advanced Inorganic Chemistry, 6th Ed., Wiley-Interscience, 1999). For example, the inorganic oxide can comprise oxygen and an element, or elements, selected from Al, B, Be, Bi, Cd, Co, Cr, Cu, Fe, Ga, La, Mn, Mo, Ni, Sb, Si, Sn, Sr, Th, Ti, V, W, P, Y, Zn, and Zr.

Nonlimiting examples of solid oxide materials or compounds that can be used to form the chemically-treated solid oxide suitable for use in the present disclosure include $Al_2O_3$, $B_2O_3$, BeO, $Bi_2O_3$, CdO, $Co_3O_4$, $Cr_2O_3$, CuO, $Fe_2O_3$, $Ga_2O_3$, $La_2O_3$, $Mn_2O_3$, $MoO_3$, NiO, $P_2O_5$, $Sb_2O_5$, $SiO_2$, $SnO_2$, SrO, $ThO_2$, $TiO_2$, $V_2O_5$, $WO_3$, $Y_2O_3$, ZnO, $ZrO_2$, and the like, including mixed oxides thereof, or combinations thereof. For example, the solid oxide can comprise silica, alumina, silica-alumina, silica-coated alumina, aluminum phosphate, aluminophosphate, heteropolytungstate, titania, zirconia, magnesia, boria, zinc oxide, mixed oxides thereof, or any combinations thereof.

The solid oxide of this disclosure encompasses oxide materials such as alumina, "mixed oxide" compounds thereof such as silica-alumina, and combinations and mixtures thereof. The mixed oxide compounds such as silica-alumina can be single or multiple chemical phases with more than one metal combined with oxygen to form a solid oxide

compound. Nonlimiting examples of mixed oxides suitable for use in the activator-support of the present disclosure include silica-alumina, silica-titania, silica-zirconia, zeolites, various clay minerals, alumina-titania, alumina-zirconia, zinc-aluminate, alumina-boria, silica-boria, aluminophosphate-silica, titania-zirconia, and the like, or combinations thereof. The solid oxide of this disclosure also encompasses oxide materials such as silica-coated alumina, as described in U.S. Patent No. 7,884,163, which is incorporated herein by reference in its entirety.

In an embodiment, the silica-alumina suitable for use in the present disclosure to prepare a chemically-treated silica-alumina can be characterized by a pore volume of greater than about 0.5 cc/g, alternatively greater than about 0.8 cc/g, or alternatively greater than about 1.0 cc/g.

In an embodiment, the silica-alumina suitable for use in the present disclosure to prepare the chemically-treated silica-alumina can be characterized by a surface area of greater than about 100 $m^2/g$ to about 1000 $m^2/g$, alternatively greater than about 250 $m^2/g$, or alternatively greater than about 350 $m^2/g$.

In an embodiment, the silica-alumina suitable for use in the present disclosure to prepare the chemically-treated silica-alumina can be characterized by an alumina content of from about 5 wt.% to about 95 wt.%, based on the total weight of the silica-alumina. In some embodiments, the silica-alumina suitable for use in the present disclosure to prepare the chemically-treated silica-alumina can be characterized by an alumina content of from about 5 wt.% to about 50 wt.%, alternatively from about 8 wt.% to about 30 wt.%, based on the total weight of the silica-alumina. In other embodiments, the silica-alumina suitable for use in the present disclosure to prepare the chemically-treated silica-alumina can be characterized by an alumina content of from about 60 wt.% to about 90 wt.%, alternatively from about 65 wt.% to about 80 wt.%, based on the total weight of the silica-alumina. In yet other embodiments, the solid oxide component can comprise alumina without silica. In still yet other embodiments, the solid oxide component can comprise silica without alumina.

The electron-withdrawing component used to treat the solid oxide can be any component that increases the Lewis or Bronsted acidity of the solid oxide upon treatment (as compared to the solid oxide that is not treated with at least one electron-withdrawing anion). According to one aspect of the present disclosure, the electron-withdrawing component is an electron-withdrawing anion derived from a salt, an acid, or other compound, such as a volatile organic compound, that serves as a source or precursor for that anion. Nonlimiting examples of electron-withdrawing anions suitable for use in the present disclosure include sulfate, bisulfate, fluoride, chloride, bromide, iodide, fluorosulfate, fluoroborate, phosphate, fluorophosphate, trifluoroacetate, triflate, fluorozirconate, fluorotitanate, phospho-tungstate, and the like, mixtures thereof, or combinations thereof. In addition, other ionic or non-ionic compounds that serve as sources for these electron-withdrawing anions can also be employed in the present disclosure. It is contemplated that the electron-withdrawing anion can be, or can comprise, fluoride, chloride, bromide, phosphate, triflate, bisulfate, or sulfate, and the like, or any combination thereof, in some aspects of this disclosure. In other aspects, the electron-withdrawing anion can comprise sulfate, bisulfate, fluoride, chloride, bromide, iodide, fluorosulfate, fluoroborate, phosphate, fluorophosphate, trifluoroacetate, triflate, fluorozirconate, fluorotitanate, and the like, or any combination thereof.

Thus, for example, the activator-support (e.g., chemically-treated solid oxide) suitable for use in the catalyst compositions of the present disclosure can be, or can comprise, fluorided alumina, chlorided alumina, bromided alumina, sulfated alumina, fluorided silica-alumina, chlorided silica-alumina, bromided silica-alumina, sulfated silica-alumina, fluorided silica-zirconia, chlorided silica-zirconia, bromided silica-zirconia, sulfated silica-zirconia, fluorided silica-titania, fluorided silica-coated alumina, sulfated silica-coated alumina, phosphated silica-coated alumina, and the like, or combinations thereof. In one aspect, the activator-support can be, or can comprise, fluorided alumina, sulfated alumina, fluorided silica-alumina, sulfated silica-alumina, fluorided silica-coated alumina, sulfated silica-coated alumina, phosphated silica-coated alumina, and the like, or any combination thereof. In another aspect, the activator-support comprises fluorided alumina; alternatively, comprises chlorided alumina; alternatively, comprises sulfated alumina; alternatively, comprises fluorided silica-alumina; alternatively, comprises sulfated silica-alumina; alternatively, comprises fluorided silica-zirconia; alternatively, comprises chlorided silica-zirconia; or alternatively, comprises fluorided silica-coated alumina. In yet another aspect of the present disclosure, the activator-support suitable for use in the catalyst compositions of the present disclosure can be, or can comprise, alumina treated with hexafluorotitanic acid, silica-coated alumina treated with hexafluorotitanic acid, silica-alumina treated with hexafluorozirconic acid, silica-alumina treated with trifluoroacetic acid, fluorided boria-alumina, silica treated with tetrafluoroboric acid, alumina treated with tetrafluoroboric acid, alumina treated with hexafluorophosphoric acid; or any combination of the above. Further, any of these activator-supports optionally can be treated with a metal ion.

When the electron-withdrawing component comprises a salt of an electron-withdrawing anion, the counterion or cation of that salt can be selected from any cation that allows the salt to revert or decompose back to the acid during calcining. Factors that dictate the suitability of a particular salt to serve as a source for the electron-withdrawing anion include, but are not limited to, the solubility of the salt in a desired solvent, the lack of adverse reactivity of the cation, ion-pairing effects between the cation and anion, hygroscopic properties imparted to the salt by the cation, and the like, and thermal stability of the anion. Nonlimiting examples of cations suitable for use in the present disclosure in the salt of the electron-withdrawing anion include ammonium, trialkyl ammonium, tetraalkyl ammonium, tetraalkyl phosphonium,

$H^+$, $[H(OEt_2)_2]^+$, and the like, or combinations thereof.

Further, combinations of one or more different electron-withdrawing anions, in varying proportions, can be used to tailor the specific acidity of the activator-support to a desired level. Combinations of electron-withdrawing components can be contacted with the oxide material simultaneously or individually, and in any order that affords the desired chemically-treated solid oxide acidity. For example, one aspect of this disclosure is employing two or more electron-withdrawing anion source compounds in two or more separate contacting steps.

In one aspect of this disclosure, one example of a process by which a chemically-treated solid oxide is prepared is as follows: a selected solid oxide, or combination of solid oxides, can be contacted with a first electron-withdrawing anion source compound to form a first mixture; such first mixture can be calcined and then contacted with a second electron-withdrawing anion source compound to form a second mixture; the second mixture can then be calcined to form a treated solid oxide. In such a process, the first and second electron-withdrawing anion source compounds can be either the same or different compounds.

According to another aspect of the present disclosure, the chemically-treated solid oxide comprises a solid inorganic oxide material, a mixed oxide material, or a combination of inorganic oxide materials, that is chemically-treated with an electron-withdrawing component, and optionally treated with a metal source, including metal salts, metal ions, or other metal-containing compounds. Nonlimiting examples of the metal or metal ion suitable for use in the present disclosure include zinc, nickel, vanadium, titanium, silver, copper, gallium, tin, tungsten, molybdenum, zirconium, and the like, or combinations thereof. Nonlimiting examples of chemically-treated solid oxides that contain a metal or metal ion suitable for use in the present disclosure include chlorided zinc-impregnated alumina, fluorided titanium-impregnated alumina, fluorided zinc-impregnated alumina, chlorided zinc-impregnated silica-alumina, fluorided zinc-impregnated silica-alumina, sulfated zinc-impregnated alumina, chlorided zinc aluminate, fluorided zinc aluminate, sulfated zinc aluminate, silica-coated alumina treated with hexafluorotitanic acid, silica-coated alumina treated with zinc and then fluorided, and the like, or any combination thereof.

Any suitable method of impregnating the solid oxide material with a metal can be used. The method by which the oxide is contacted with a metal source, typically a salt or metal-containing compound, can include, but is not limited to, gelling, co-gelling, impregnation of one compound onto another, and the like, or combinations thereof. If desired, the metal-containing compound is added to or impregnated into the solid oxide in solution form, and subsequently converted into the supported metal upon calcining. Accordingly, the solid inorganic oxide can further comprise a metal selected from zinc, titanium, nickel, vanadium, silver, copper, gallium, tin, tungsten, molybdenum, and the like, or combinations thereof. For example, zinc is often used to impregnate the solid oxide because it can provide improved catalyst activity at a low cost.

The solid oxide can be treated with metal salts or metal-containing compounds prior to, concurrent with, and/or subsequent to the solid oxide being treated with the electron-withdrawing anion. Following any contacting method, the contacted mixture of solid compound, electron-withdrawing anion, and the metal ion is typically calcined. Alternatively, a solid oxide material, an electron-withdrawing anion source, and the metal salt or metal-containing compound are contacted and calcined simultaneously.

Various processes can be used to form the chemically-treated solid oxide suitable for use in the present disclosure. The chemically-treated solid oxide can comprise the contact product of one or more solid oxides with one or more electron-withdrawing anion sources. As will be appreciated by one of skill in the art, and with the help of this disclosure, it is not required that the solid oxide be calcined prior to contacting the electron-withdrawing anion source. The contact product can be typically calcined either concurrent with or subsequent to the solid oxide being contacted with the electron-withdrawing anion source. The solid oxide can be calcined or uncalcined. Various processes to prepare solid oxide activator-supports suitable for use in the present disclosure are described in more detail in U.S. Patent Nos. 6,107,230; 6,165,929; 6,294,494; 6,300,271; 6,316,553; 6,355,594; 6,376,415; 6,388,017; 6,391,816; 6,395,666; 6,524,987; 6,548,441; 6,548,442; 6,576,583; 6,613,712; 6,632,894; 6,667,274; and 6,750,302.

According to one aspect of the present disclosure, the solid oxide material can be chemically-treated by contacting it with an electron-withdrawing component, typically an electron-withdrawing anion source. Further, the solid oxide material optionally can be chemically treated with a metal ion, and then calcined to form a metal-containing or metal-impregnated chemically-treated solid oxide. According to another aspect of the present disclosure, the solid oxide material and electron-withdrawing anion source can be contacted and calcined simultaneously.

The method by which the oxide is contacted with the electron-withdrawing component, typically a salt or an acid of an electron-withdrawing anion, can include, but is not limited to, gelling, co-gelling, impregnation of one compound onto another, and the like, or combinations thereof. Thus, following any contacting method, the contacted mixture of the solid oxide, electron-withdrawing anion, and optional metal ion, can be calcined.

According to one aspect of the present disclosure, the solid oxide activator-support (i.e., chemically-treated solid oxide) can be produced by a process comprising: (i) contacting a solid oxide (or solid oxides) with an electron-withdrawing anion source compound (or compounds) to form a first mixture; and (ii) calcining the first mixture to form the solid oxide activator-support.

According to another aspect of the present disclosure, the solid oxide activator-support (i.e., chemically-treated solid oxide) can be produced by a process comprising: (i) contacting a solid oxide (or solid oxides) with a first electron-withdrawing anion source compound to form a first mixture; (ii) calcining the first mixture to produce a calcined first mixture; (iii) contacting the calcined first mixture with a second electron-withdrawing anion source compound to form a second mixture; and (iv) calcining the second mixture to form the solid oxide activator-support.

According to yet another aspect of the present disclosure, the solid oxide activator-support (i.e., chemically-treated solid oxide) can be produced or formed by contacting the solid oxide with the electron-withdrawing anion source compound, wherein the solid oxide compound can be calcined prior to, concurrent with, and/or subsequent to contacting the electron-withdrawing anion source, and wherein there is a substantial absence of aluminoxanes, organoboron or organoborate compounds, and ionizing ionic compounds.

Generally, calcining of the chemically-treated solid oxide can be conducted in an ambient atmosphere, typically in a dry ambient atmosphere, at a temperature from about 200 °C to about 900 °C, and for a time of from about 1 minute to about 100 hours. Calcining can be conducted at a temperature of from about 300 °C to about 800 °C, or alternatively, at a temperature of from about 400 °C to about 700 °C. Calcining can be conducted for about 30 minutes to about 50 hours, or for about 1 hour to about 15 hours. According to one aspect of this disclosure, calcining can be carried out for about 1 hour to about 10 hours at a temperature of from about 350 °C to about 550 °C. Any suitable ambient atmosphere can be employed during calcining. Generally, calcining can be conducted in an oxidizing atmosphere, such as air. Alternatively, an inert atmosphere, such as nitrogen or argon, or a reducing atmosphere, such as hydrogen or carbon monoxide, can be used.

According to one aspect of the present disclosure, the solid oxide material can be treated with a source of halide ion, sulfate ion, or a combination of anions, optionally treated with a metal ion, and then calcined to provide the chemically-treated solid oxide in the form of a particulate solid. For example, the solid oxide material can be treated with a source of sulfate (termed a "sulfating agent"), a source of chloride ion (termed a "chloriding agent"), a source of fluoride ion (termed a "fluoriding agent"), or a combination thereof, and calcined to provide the solid oxide activator-support.

According to one aspect of the present disclosure, the chemically-treated solid oxide can comprise a fluorided solid oxide in the form of a particulate solid. The fluorided solid oxide can be formed by contacting a solid oxide with a fluoriding agent. Fluoride ions can be added to the oxide by forming a slurry of the oxide in a suitable solvent such as alcohol or water including, but not limited to, the one to three carbon alcohols because of their volatility and low surface tension. Nonlimiting examples of fluoriding agents suitable for use in the present disclosure include hydrofluoric acid (HF), ammonium fluoride ($NH_4F$), ammonium bifluoride ($NH_4HF_2$), ammonium tetrafluoroborate ($NH_4BF_4$), ammonium silicofluoride (hexafluorosilicate) ($(NH_4)_2SiF_6$), ammonium hexafluorophosphate ($NH_4PF_6$), hexafluorotitanic acid ($H_2TiF_6$), ammonium hexafluorotitanic acid ($(NH_4)_2TiF_6$), hexafluorozirconic acid ($H_2ZrF_6$), $AlF_3$, $NH_4AlF_4$, analogs thereof, and the like, or combinations thereof. Triflic acid and ammonium triflate also can be employed. For example, ammonium bifluoride ($NH_4HF_2$) can be used as the fluoriding agent, due to its ease of use and availability.

If desired, the solid oxide can be treated with a fluoriding agent during the calcining step. Any fluoriding agent capable of thoroughly contacting the solid oxide during the calcining step can be employed. For example, in addition to those fluoriding agents described previously, volatile organic fluoriding agents can be used. Nonlimiting examples of volatile organic fluoriding agents suitable for use in the present disclosure include freons, perfluorohexane, perfluorobenzene, fluoromethane, trifluoroethanol, and the like, or combinations thereof. Calcining temperatures generally must be high enough to decompose the compound and release fluoride. Gaseous hydrogen fluoride (HF) or fluorine ($F_2$) itself also can be used with the solid oxide if fluoriding while calcining. Silicon tetrafluoride ($SiF_4$) and compounds containing tetrafluoroborate ($BF_4^-$) can also be employed. One convenient method of contacting the solid oxide with the fluoriding agent is to vaporize a fluoriding agent into a gas stream used to fluidize the solid oxide during calcining.

Similarly, according to another aspect of the present disclosure, the chemically-treated solid oxide can comprise a chlorided solid oxide in the form of a particulate solid. The chlorided solid oxide can be formed by contacting a solid oxide with a chloriding agent. Chloride ions can be added to the oxide by forming a slurry of the oxide in a suitable solvent. The solid oxide can be treated with a chloriding agent during the calcining step. Any chloriding agent capable of serving as a source of chloride and thoroughly contacting the oxide during the calcining step can be used, such as $SiCl_4$, $SiMe_2Cl_2$, $TiCl_4$, $BCl_3$, and the like, or combinations thereof. Volatile organic chloriding agents can also be employed. Examples of suitable volatile organic chloriding agents include, but are not limited to, certain freons (e.g., chlorine-containing freons), perchlorobenzene, chloromethane, dichloromethane, chloroform, carbon tetrachloride, trichloroethanol, and the like, or combinations thereof. Gaseous hydrogen chloride or chlorine itself can also be used with the solid oxide during calcining. One convenient method of contacting the oxide with the chloriding agent is to vaporize a chloriding agent into a gas stream used to fluidize the solid oxide during calcining.

According to one aspect of this disclosure, the amount of halide ions (e.g., fluoride, chloride, etc.) present prior to calcining the solid oxide can generally be from about 1 wt.% to about 50 wt.%, alternatively from about 1 wt.% to about 25 wt.%, alternatively from about 2 wt.% to about 20 wt.%, alternatively from about 4 wt.% to about 10 wt.%, by weight of the solid oxide (e.g., silica-alumina) prior to calcining. Once impregnated with halide, the halided solid oxide

can be dried by any suitable method including, but not limited to, suction filtration followed by evaporation, drying under vacuum, spray drying, and the like, although it is also possible to initiate the calcining step immediately without drying the impregnated solid oxide (e.g., fluorided solid oxide, chlorided solid oxide, etc.).

Similarly, according to yet another aspect of the present disclosure, the chemically-treated solid oxide can comprise a sulfated solid oxide in the form of a particulate solid. The sulfated solid oxide can comprise a sulfate and a solid oxide component, such as alumina or silica-alumina, in the form of a particulate solid. Optionally, the sulfated solid oxide can be treated further with a metal ion such that the calcined sulfated oxide comprises a metal. According to one aspect of the present disclosure, the sulfated solid oxide comprises sulfate and alumina. In some instances, the sulfated alumina is formed by a process wherein the alumina is treated with a sulfate source, for example, sulfuric acid or a sulfate salt such as ammonium sulfate. This process is generally performed by forming a slurry of the alumina in a suitable solvent, such as alcohol or water, in which the desired concentration of the sulfating agent has been added. Suitable organic solvents include, but are not limited to, the one to three carbon alcohols because of their volatility and low surface tension.

According to one aspect of this disclosure, the amount of sulfate ions present prior to calcining the solid oxide can be from about 1 to about 25 parts by weight of sulfate ion to about 100 parts by weight of solid oxide. According to another aspect of this disclosure, the amount of sulfate ions present prior to calcining can be from about 2 to about 20 parts by weight of sulfate ion to about 100 parts by weight of solid oxide. According to yet another aspect of this disclosure, the amount of sulfate ions present prior to calcining can be from about 4 to about 10 parts by weight of sulfate ion to about 100 parts by weight of solid oxide. These weight ratios are based on the weight of the solid oxide prior to calcining. Once impregnated with sulfate, the sulfated solid oxide can be dried by any suitable method including, but not limited to, suction filtration followed by evaporation, drying under vacuum, spray drying, and the like, although it is also possible to initiate the calcining step immediately.

According to another aspect of the present disclosure, the activator-support suitable for use in preparing the catalyst compositions of this disclosure comprises an ion-exchangeable activator-support, including but not limited to silicate and aluminosilicate compounds or minerals, either with layered or non-layered structures, and combinations thereof. In another aspect of this disclosure, ion-exchangeable, layered aluminosilicates such as pillared clays can be used as activator-supports. When the acidic activator-support comprises an ion-exchangeable activator-support, it can optionally be treated with at least one electron-withdrawing anion such as those disclosed previously herein, though typically the ion-exchangeable activator-support is not treated with an electron-withdrawing anion.

According to another aspect of the present disclosure, the activator-support suitable for use in the catalyst compositions of the present disclosure can be, or can comprise, a pillared clay, such as a pillared montmorillonite, optionally treated with fluoride, chloride, or sulfate; phosphated alumina or other aluminophosphates optionally treated with sulfate, fluoride, or chloride; or any combination of the above. Further, any of these activator-supports optionally can be treated with a metal ion, as previously disclosed herein for the solid oxide activator-support.

According to another aspect of the present disclosure, the activator-support of this disclosure comprises clay minerals having exchangeable cations and layers capable of expanding. Typical clay mineral activator-supports include, but are not limited to, ion-exchangeable, layered aluminosilicates such as pillared clays.

According to yet another aspect of the present disclosure, the clay materials of this disclosure encompass materials either in their natural state or that have been treated with various ions by wetting, ion exchange, or pillaring. Typically, the clay material activator-support of this disclosure comprises clays that have been ion exchanged with large cations, including polynuclear, highly charged metal complex cations. However, the clay material activator-supports of this disclosure also encompass clays that have been ion exchanged with simple salts, including, but not limited to, salts of Al(III), Fe(II), Fe(III), and Zn(II) with ligands such as halide, acetate, sulfate, nitrate, or nitrite.

According to one aspect of the present disclosure, the activator-support comprises a pillared clay. The term "pillared clay" is used to refer to clay materials that have been ion exchanged with large, typically polynuclear, highly charged metal complex cations. Nonlimiting examples of such ions include Keggin ions which can have charges such as 7+, various polyoxometallates, and other large ions. Thus, the term "pillaring" refers to a simple exchange reaction in which the exchangeable cations of a clay material are replaced with large, highly charged ions, such as Keggin ions. These polymeric cations are then immobilized within the interlayers of the clay and when calcined are converted to metal oxide "pillars," effectively supporting the clay layers as column-like structures. Thus, once the clay is dried and calcined to produce the supporting pillars between clay layers, the expanded lattice structure is maintained and the porosity is enhanced. The resulting pores can vary in shape and size as a function of the pillaring material and the parent clay material used. Pillaring and pillared clays are described in more detail in: T.J. Pinnavaia, Science 220 (4595), 365-371 (1983); J.M. Thomas, Intercalation Chemistry, (S. Whittington and A. Jacobson, Eds.) Ch. 3, pp. 55-99, Academic Press, Inc., (1972); U.S. Patent Nos. 4,452,910; 5,376,611; and 4,060,480.

The pillaring process utilizes clay minerals having exchangeable cations and layers capable of expanding. Any pillared clay that can enhance the polymerization of olefins in the catalyst composition of the present disclosure can be used. Therefore, suitable clay minerals for pillaring include, but are not limited to, allophanes; smectites, both dioctahedral

(Al) and tri-octahedral (Mg) and derivatives thereof such as montmorillonites (bentonites), nontronites, hectorites, or laponites; halloysites; vermiculites; micas; fluoromicas; chlorites; mixed-layer clays; fibrous clays including but not limited to sepiolites, attapulgites, and palygorskites; a serpentine clay; illite; laponite; saponite; and any combination thereof. In one aspect, the pillared clay activator-support comprises bentonite or montmorillonite. The principal component of bentonite is montmorillonite.

In some aspects of this disclosure, the pillared clay can be pretreated. For example, a pillared bentonite can be pretreated by drying at about 300 °C under an inert atmosphere, typically dry nitrogen, for about 3 hours, before being added to the polymerization reactor. Although an exemplary pretreatment is described herein, it should be understood that the pretreating can be carried out at many other temperatures and times, including any combination of temperature and time steps, all of which are encompassed by this disclosure.

The activator-support used to prepare the catalyst compositions of the present disclosure can be combined with other inorganic support materials, including, but not limited to, zeolites, inorganic oxides, phosphated inorganic oxides, and the like. In one aspect, typical support materials that can be used include, but are not limited to, silica, silica-alumina, alumina, titania, zirconia, magnesia, boria, thoria, aluminophosphate, aluminum phosphate, silica-titania, coprecipitated silica/titania, mixtures thereof, or any combination thereof.

In an embodiment, a process of making activator-supports comprising inorganic support materials can include precipitation, co-precipitation, impregnation, gelation, pore-gelation, calcining (at up to 900 °C), spray-drying, flash-drying, rotary drying and calcining, milling, sieving, and the like, or combinations thereof.

In an embodiment, an organoaluminum compound suitable for use in the present disclosure comprises an alkylaluminum compound. For example, the organoaluminum compound can comprise a trialkylaluminum compound, having the general formula $AlR_3$. Nonlimiting examples of trialkylaluminum compounds suitable for use in the present disclosure include triisobutylaluminum (TiBA or TiBAl); tri-n-butylaluminum (TNBA); tri-octly-butylaluminum (TOBA); triethylaluminum (TEA); and/or other appropriate alkyl-aluminum complexes, or combinations thereof. Additionally, partially hydrolyzed alkylaluminum compounds and/or aluminoxanes can be used. In an embodiment, the organoaluminum compound comprises a compound represented by the general formula:

$$Al(X^9)_p(X^{10})_q$$

wherein $X^9$ is a halide, hydrocarbyloxide group, hydrocarbylamino group or combinations thereof; $X^{10}$ is a hydrocarbyl group having up to 18 carbon atoms; p ranges from 0 to 2; and q is (3 - p).

In an embodiment, a catalyst system suitable for use in the present disclosure comprises an ansa-metallocene compound (e.g., metallocene compound characterized by structure (16)), an activator-support (e.g., sulfated alumina); and an organoaluminum compound (e.g., TiBA).

In an alternative embodiment, a catalyst system suitable for use in the present disclosure comprises an unbridged metallocene compound (e.g., metallocene compound characterized by structure (5)), an activator-support (e.g., sulfated alumina); and an organoaluminum compound (e.g., TiBA).

In an embodiment, a monomer (e.g., ethylene) and comonomer can be polymerized using the methodologies disclosed herein to produce a copolymer of the type disclosed herein (e.g., metallocene-catalyzed polyethylene copolymer). In an embodiment, the comonomer can comprise unsaturated hydrocarbons having from 3 to 20 carbon atoms. The PE copolymer is a polymer of ethylene with one or more comonomers which are alpha olefins. Nonlimiting examples of alpha olefins suitable for use as comonomers in the present disclosure include propylene, 1-butene, 1-pentene, 1-hexene, 3-methyl-1-butene, 4-methyl-1-pentene, 1-heptene, 1-octene, 1-nonene, 1-decene, and the like, and combinations thereof. In an embodiment, the comonomer comprises 1-butene, 1-hexene, 1-octene, or combinations thereof. In an embodiment, the comonomer comprises 1-hexene.

In an embodiment, a metallocene-catalyzed polyethylene copolymer of the type described herein can comprise a comonomer in an amount of equal to or greater than about 0.6 wt.%, alternatively greater than about 0.7 wt.%, or alternatively greater than about 1 wt.%, based on the total weight of the copolymer.

In an embodiment, a metallocene-catalyzed polyethylene copolymer of the type described herein can be characterized by a density of less than about 0.965 g/cc, alternatively less than about 0.962 g/cc, or alternatively less than about 0.958 g/cc, as determined in accordance with ASTM D1505.

In an embodiment, a metallocene-catalyzed polyethylene copolymer of the type described herein is an unimodal resin. Herein, the "modality" of a polymer resin refers to the form of its molecular weight distribution curve, i.e., the appearance of the graph of the polymer weight fraction as a function of its molecular weight. The polymer weight fraction refers to the weight fraction of molecules of a given size. A polymer having a molecular weight distribution curve showing a single peak can be referred to as a unimodal polymer, a polymer having curve showing two distinct peaks can be referred to as bimodal polymer, a polymer having a curve showing three distinct peaks can be referred to as trimodal polymer, etc. Polymer modality can be determined using any suitable methodology, such as for example as described in ASTM D6474 and/or as described in the Examples section of this disclosure later herein. Polymer modality could be

determined by using size exclusion chromatography (SEC) and/or gel permeation chromatography (GPC).

In an embodiment, a metallocene-catalyzed polyethylene copolymer of the type described herein can be characterized by a weight average molecular weight ($M_w$) of from about 10 kg/mol to about 135 kg/mol; alternatively of from about 30 kg/mol to about 130 kg/mol; or alternatively of from about 50 kg/mol to about 125 kg/mol; a number average molecular weight ($M_n$) of from about 2 kg/mol to about 60 kg/mol, alternatively from about 6 kg/mol to about 50 kg/mol; or alternatively from about 10 kg/mol to about 45 kg/mol; and a z-average molecular weight ($M_z$) of from about 25 kg/mol to about 260 kg/mol, alternatively from about 75 kg/mol to about 250 kg/mol; or alternatively from about 125 kg/mol to about 245 kg/mol. The weight average molecular weight describes the size average (e.g., molecular weight distribution) of a polymer composition and can be calculated according to equation 1:

$$M_w = \frac{\sum_i N_i M_i^2}{\sum_i N_i M_i} \qquad (1)$$

wherein $N_i$ is the number of molecules of molecular weight $M_i$. All molecular weight averages are expressed in gram per mole (g/mol) or Daltons (Da), or in kg/mol or kDa. The number average molecular weight is the common average of the molecular weights of the individual polymers and can be calculated by measuring the molecular weight $M_i$ of $N_i$ polymer molecules, summing the weights, and dividing by the total number of polymer molecules, according to equation 2:

$$M_n = \frac{\sum_i N_i M_i}{\sum_i N_i} \qquad (2)$$

wherein $N_i$ is the number of molecules of molecular weight $M_i$. The z-average molecular weight is a higher order molecular weight average which is calculated according to equation 3:

$$M_z = \frac{\sum_i N_i M_i^3}{\sum_i N_i M_i^2} \qquad (3)$$

wherein $N_i$ is the number of molecules of molecular weight $M_i$.

In an embodiment, a metallocene-catalyzed polyethylene copolymer of the type described herein can be characterized by a molecular weight distribution (MWD) of from about 2 to about 6, alternatively from about 2.5 to about 5.5, or alternatively from about 2.7 to about 5. The MWD is the ratio of the $M_w$ to the $M_n$ ($M_w/M_n$), which can also be referred to as the polydispersity index (PDI) or more simply as polydispersity.

A metallocene-catalyzed polyethylene copolymer of the type described herein is characterized by a ratio of the $M_z$ to the $M_w$ ($M_z/M_w$) of from 1.9 to about 2.7, alternatively from about 1.9 to about 2.3. The ratio $M_z/M_w$ is another indication of the breadth of the MWD of a polymer.

A metallocene-catalyzed polyethylene copolymer of the type described herein is further characterized by a ratio of the $M_z$ to the $M_n$ ($M_z/M_n$) of from 4 to 15, alternatively from about 4.5 to about 11, or alternatively from about 5 to about 9. The ratio $M_z/M_n$ is yet another indication of the breadth of the MWD of a polymer.

A metallocene-catalyzed polyethylene copolymer of the type described herein is further characterized by a melt index (MI) under a force of 2.16 kg ($I_{2.16}$) of greater than about 0.8 gram per 10 minutes (g/10 min), alternatively greater than about 0.9 g/10 min, alternatively greater than about 1 g/10 min, or alternatively greater than about 2 g/10 min. The melt index (MI) refers to the amount of a polymer which can be forced through a melt indexer orifice of 0.0825 inch diameter when subjected to a force of 2160 grams in ten minutes at 190 °C, as determined in accordance with ASTM D1238.

In an embodiment, a metallocene-catalyzed polyethylene copolymer of the type described herein can be further characterized by the degree and nature of branching present in the individual components of the polymer composition and/or in the polymer composition as a whole. Short chain branching (SCB) is known for its effects on polymer properties such as stiffness, tensile properties, heat resistance, hardness, permeation resistance, shrinkage, creep resistance, transparency, stress crack resistance, flexibility, impact strength, and the solid state properties of semi-crystalline polymers such as polyethylene. For purposes of the disclosure herein, SCB is defined as comprising chains that have a

number of carbon atoms ranging from about 1 carbon atom to about 18 carbon atoms, alternatively from about 3 carbon atoms to about 10 carbon atoms, or alternatively from about 4 carbon atoms to about 6 carbon atoms. In an embodiment, SCB comprises butyl branches.

SCB content can be determined as the number of short chain branches per 1,000 carbon atoms (SCB/1,000 carbons). A metallocene-catalyzed polyethylene copolymer of the type described herein is characterized by a short chain branching content (for the composition as a whole) of greater than 0.6 SCB/1,000 carbons, alternatively greater than about 0.8 SCB/1,000 carbons, or alternatively greater than about 1 SCB/1,000 carbons.

In an embodiment, a metallocene-catalyzed polyethylene copolymer of the type described herein can be characterized by a $C_3$ to $C_{18}$ (e.g., propyl, butyl, pentyl, hexyl, to octadecyl) branching content (for the composition as a whole) of greater than about 0.6 $C_3$ to $C_{18}$ branches per 1,000 carbons, or alternatively greater than about 0.9 $C_3$ to $C_{18}$ branches per 1,000 carbons. Generally, propyl branching can be used as an indication of comonomer (e.g., 1-pentene) incorporation in the copolymer (e.g., PE copolymer); butyl branching can be used as an indication of comonomer (e.g. 1-hexene) incorporation in the copolymer (e.g., PE copolymer); hexyl branching can be used as an indication of comonomer (e.g., 1-octene) incorporation in the copolymer (e.g., PE copolymer); etc.

In an embodiment, a metallocene-catalyzed polyethylene copolymer of the type described herein can be characterized by a butyl branching content (for the composition as a whole) of greater than about 0.6 butyl branches per 1,000 carbons, or alternatively greater than about 0.9 butyl branches per 1,000 carbons. Generally, butyl branching can be used as an indication of comonomer (e.g., 1-hexene) incorporation in the copolymer (e.g., PE copolymer).

Branching content ($C_1$ to $C_{18}$) can be measured in copolymers by using classical 13C nuclear magnetic resonance (NMR) spectroscopy techniques on NMR spectrometers, such as for example on a Varian Inova-500 spectrometer. Methods for the determination of type and number of short chain branching are described in more detail in Randall, J. C., Hsieh, E. T., NMR and Macromolecules; Sequence, Dynamic, and Domain Structure, ACS Symposium Series 247, J. C. Randall, Ed., American Chemical Society, Washington D.C., 1984, which is incorporated by reference herein in its entirety.

In an embodiment, a metallocene-catalyzed polyethylene copolymer of the type described herein can be characterized by a Carreau-Yasuda 'a' parameter of greater than about 0.4, alternatively greater than about 0.45, or alternatively greater than about 0.5. The Carreau-Yasuda 'a' parameter (CY-a) is defined as a rheological breadth parameter. Rheological breadth refers to the breadth of the transition region between Newtonian and power-law type shear rate for a polymer or the frequency dependence of the viscosity of the polymer. The rheological breadth is a function of the relaxation time distribution of a polymer, which in turn is a function of the polymer molecular structure or architecture. The CY-a parameter can be obtained by assuming the Cox-Merz rule and calculated by fitting flow curves generated in linear-viscoelastic dynamic oscillatory frequency sweep experiments with a modified Carreau-Yasuda (CY) model, which is represented by equation 4:

$$|\eta^*(\omega)| = \eta_o\left[1+\left(\tau_\eta\omega\right)^a\right]^{\frac{n-1}{a}} \quad (4)$$

wherein

$|\eta^*(\omega)|$ = magnitude of the complex shear viscosity (Pa-s);
$\eta_o$ = zero shear viscosity (Pa-s) [defines the Newtonian plateau];
$\omega$ = angular frequency of oscillatory shear deformation (i.e., shear rate (1/s));
$a$ = rheological breadth parameter;
$\tau_\eta$ = viscous relaxation time (s) [describes the location in time of the transition region];
$n$ = power law constant [defines the final slope of the high shear rate region].

To facilitate model fitting, the power law constant *n* is held at a constant value (i.e., 0.1818). The dynamic shear viscosities can be measured experimentally, and the data can be fit to the CY equation 4 to determine $\eta_o$ values and other rheological parameters. Details of the significance and interpretation of the CY model and derived parameters can be found in: C. A. Hieber and H. H. Chiang, Rheol. Acta, 28, 321 (1989); C.A. Hieber and H.H. Chiang, Polym. Eng. Sci., 32, 931 (1992); and R. B. Bird, R. C. Armstrong and O. Hasseger, Dynamics of Polymeric Liquids, Volume 1, Fluid Mechanics, 2nd Edition, John Wiley & Sons (1987), each of which is incorporated by reference herein in its entirety.

The zero shear viscosity ($\eta_o$) refers to the viscosity of the polymer at a zero shear rate and is indicative of the molecular structure of materials. Further, for polymer melts, the zero shear viscosity is often a useful indicator of processing attributes such as melt strength in blow-molding and foam technologies and bubble stability in film blowing. For example, the higher the zero shear viscosity, the better the melt strength or bubble stability. A metallocene-catalyzed polyethylene copolymer of the type described herein is characterized by a zero shear viscosity ($\eta_o$), defined by equation 4, in the

range of from 1×$10^2$ Pa-s to 4×$10^3$ Pa-s, alternatively from about 1×$10^3$ Pa-s to about 4×$10^3$ Pa-s.

In an embodiment, a metallocene-catalyzed polyethylene copolymer of the type described herein can be characterized by a viscous relaxation time ($\tau_\eta$), defined by equation 4, of less than about 1.3×$10^{-2}$ seconds, alternatively less than about 1.2×$10^{-2}$ seconds, or alternatively less than about 1.1×$10^{-2}$ seconds. The relaxation rate refers to the viscous relaxation times of the polymer and is indicative of a distribution of relaxation times associated with the wide distribution of molecular weights.

Polymers of the type disclosed herein (e.g., metallocene-catalyzed polyethylene copolymers) can be formed into articles of manufacture or end-use articles using any suitable technique such as blown and cast film extrusion, blow molding, injection molding, fiber spinning, thermoforming.

In an embodiment, copolymers of the type described herein (e.g., metallocene-catalyzed polyethylene copolymers) can be fabricated into a film. The films of this disclosure can be produced by any suitable method and under any suitable condition for the production of films. In an embodiment, the copolymers are formed into films through a cast film process. In a cast film process, plastic melt is extruded through a slit die, usually horizontal ly to form a thin film. The thin film comes into contact with a chill roll. Good contact between the molten polymer and the roll is done by use of an air knife that holds the contact by applying a wide jet of air across the width of the roller. In cast film, the film is oriented uniaxially in the machine direction. The films formed from copolymer resins of this disclosure (e.g., metallocene-catalyzed polyethylene copolymers) can be of any thickness desired by the user. Alternatively, the copolymers this disclosure can be formed into films having a thickness of from about 0.1 millimeters (mils) to about 5 mils, alternatively from about 0.2 mils to about 2 mils, or alternatively from about 0.3 mils to about 1.65 mils.

In an embodiment, films formed from copolymers of this disclosure (e.g., metallocene-catalyzed polyethylene copolymers) can display enhanced barrier properties. For example, said films can display a reduced moisture vapor transmission rate (MVTR) when compared to films formed from homopolymers produced with otherwise similar catalysts systems (e.g., metallocene-catalyzed polyethylene homopolymers). As will be appreciated by one of skill in the art, and with the help of this disclosure, a homopolymer can comprise an inconsequential amount of comonomer and still be considered a homopolymer. Herein, an inconsequential amount of a comonomer refers to an amount that does not substantively affect the properties of the homopolymer. For example, a comonomer can be present in an amount of less than about 0.5 wt.%, 0.3 wt.%, or 0.1 wt.% based on the total weight of homopolymer.

2.54 x $10^{-5}$ m (1-mil) monolayer films produced from copolymers of this disclosure (e.g., metallocene-catalyzed polyethylene copolymer) have an MVTR of less than 3.54 x $10^{-7}$ kg/m/day (0.90 grams mil per 100 square inch per day (g-mil/100 $in^2$/day)), preferably less than 2.96 x $10^{-7}$ kg/m/day (0.75 g-mil/100 $in^2$/day), more preferably less than 2.36 x $10^{-7}$ kg/m/day (0.60 g-mil/100 $in^2$/day), such as less than 1.97 x $10^{-7}$ kg/m/day (0.50 g-mil/100 $in^2$/day), as measured in accordance with ASTM F1249 at 37.8°C (100 °F) and 100% relative humidity (RH). The MVTR measures passage of gaseous water ($H_2O$) through a barrier (e.g., a film barrier). The MVTR can also be referred to as the water vapor transmission rate (WVTR). Typically, the MVTR is measured in a special chamber, divided vertically by the substrate/barrier material (e.g., film). A dry atmosphere is in one chamber, and a moist atmosphere is in the other. A 24-hour test is run to see how much moisture passes through the substrate/barrier from the "wet" chamber to the "dry" chamber under conditions which can specify any one of five combinations of temperature and humidity in the "wet" chamber. The lower the transmission rate (MVTR), the better is the film at blocking moisture (e.g., the better the barrier properties of the film).

In an embodiment, a metallocene-catalyzed polyethylene copolymer when tested in accordance with ASTM F1249 can have an MVTR that is about the same, alternatively decreased by at least 5%, alternatively decreased by at least 10%, or alternatively decreased by at least 15% when compared to an MVTR determined in accordance with ASTM F1249 of an otherwise similar metallocene-catalyzed polyethylene homopolymer. In such embodiment, the homopolymer can have a density that is equal to or greater than a density of the copolymer.

In an embodiment, a metallocene-catalyzed polyethylene copolymer having a density of less than about 0.96 g/cc, when tested in accordance with ASTM F 1249 can have an MVTR that is about the same, alternatively decreased by at least 5%, alternatively decreased by at least 10%, or alternatively decreased by at least 15% when compared to an MVTR determined in accordance with ASTM F 1249 of an otherwise similar metallocene-catalyzed polyethylene homopolymer having a density of equal to or greater than about 0.96 g/cc.

In an embodiment, the films produced from copolymers of this disclosure (e.g., metallocene-catalyzed polyethylene copolymer) can be used in the formation of any variety of end-use articles. These end-use articles can include without limitation merchandise bags, t-shirt bags, trash can liners, grocery sacks, produce bags, food packaging containers, food packaging for contents such as cereals, crackers, cheese, meat, etc., shrink wrap and other items. Other nonlimiting examples of end-use articles include containers (e.g., food packaging container), cups, trays, pallets, toys, or a component of another product. In an embodiment, the copolymers disclosed herein (e.g., metallocene-catalyzed polyethylene copolymers) can be formed into films which can be useful in food packaging.

In an embodiment, the films produced from copolymers of this disclosure (e.g., metallocene-catalyzed polyethylene copolymers) can advantageously displays improved mechanical properties (e.g., impact and tear properties), as compared to films produced from homopolymers of equal or higher densities than the density of the copolymers of

this disclosure (e.g., metallocene-catalyzed polyethylene copolymers). Generally, resin manufacturers target high density homopolymer resins for manufacturing films for food packaging. However, these high densities limit other aspects of film performance, such as for example impact and tear properties. The films produced from copolymers of this disclosure (e.g., metallocene-catalyzed polyethylene copolymers) can advantageously provide good barrier performance at lower densities, thereby combining good barrier performance with good impact and tear properties.

In an embodiment, the negative impact that a lower density can have on barrier properties can be advantageously overcome by lower $M_z$ and $\eta_0$ values for the copolymers of this disclosure (e.g., metallocene-catalyzed polyethylene copolymer). Adjusting the molecular weight and rheology parameters of the copolymers can produce a product (e.g., film) with good MVTR performance when compared to homopolymers. The copolymers of this disclosure (e.g., metallocene-catalyzed polyethylene copolymers) can be expected to have better strength (tear and impact) than higher density resins. Such and additional advantages of the copolymers of this disclosure (e.g., metallocene-catalyzed polyethylene copolymer) can be apparent to one of skill in the art viewing this disclosure.

EXAMPLES

The subject matter having been generally described, the following examples are given as particular embodiments of the disclosure and to demonstrate the practice and advantages thereof. It is understood that the examples are given by way of illustration and are not intended to limit the specification of the claims to follow in any manner. The following testing procedures were used to evaluate the various polymers and compositions.

Copolymer density was determined in grams per cubic centimeter (g/cc) on a compression molded sample, cooled at about 15 °C per hour, and conditioned for about 40 hours at room temperature in accordance with ASTM D1505 and ASTM D1928, procedure C.

Molecular weight ($M_w$ and $M_z$) values were obtained according to ASTM D6474.

Rheology measurements were made as follows: Strains were generally maintained at a single value throughout a frequency sweep, but larger strain values were used for low viscosity samples to maintain a measurable torque. Smaller strain values were used for high viscosity samples to avoid overloading the torque transducer and to keep within the linear viscoelasitc limits of the sample. The instrument automatically reduces the strain at high frequencies if necessary to keep from overloading the torque transducer. These data were fit to the Carreau-Yasuda equation to determine zero shear viscosity ($\eta_o$), viscous relaxation time ($\tau_\eta$), and a measure of the breadth of the relaxation time distribution (CY-a). The Carreau-Yasuda (CY) model is represented by Equation (4), as described previously herein. To facilitate model fitting, the power law constant *n* was held at a constant value of 0.1818.

MVTR was measured in accordance with ASTM F1249.

EXAMPLE 1

Copolymers of the type described herein (e.g., metallocene-catalyzed polyethylene copolymers) were prepared using 1-hexene as a comonomer and a catalyst system comprising a single metallocene complex (e.g., metallocene characterized by structure (16) or structure (5)), a solid oxide activator-support (e.g., sulfated alumina or S-SSA) and an organoaluminum compound (e.g., triisobutylaluminum (TiBA or TiBAl)). The metallocene characterized by structure (5) is an unbridged Zr metallocene, and the metallocene characterized by structure (16) is a bridged Zr metallocene. PE homopolymers were used for comparison and were prepared without a comonomer while using similar catalyst systems comprising a single metallocene complex (e.g., metallocene characterized by structure (16) or structure (5)), a solid oxide activator-support (e.g., sulfated alumina) and an organoaluminum compound (e.g., triisobutylaluminum (TiBA or TiBAl)).

The metallocene characterized by structure (5) was used for preparing samples 1, 2, 3, and 4, out of which sample 1 was a PE homopolymer, and samples 2, 3, and 4 were PE copolymers (e.g., metallocene-catalyzed polyethylene copolymers). Table 1 displays the reaction conditions used for preparing samples 1, 2, 3, and 4. The metallocene characterized by structure (16) was used for preparing samples 5, 6, 7, 8 and 9, out of which samples 5 and 8 were PE homopolymers, and samples 6, 7, and 9 were PE copolymers (e.g., metallocene-catalyzed polyethylene copolymers). Table 2 displays the reaction conditions used for preparing samples 5, 6, 7, 8 and 9.

Table 1

| Sample ID # / Reactor Conditions | | 1* | 2 | 3 | 4* |
|---|---|---|---|---|---|
| Catalyst ID | | structure (5) | structure (5) | structure (5) | structure (5) |
| Catalyst weight | [mg] | 3 | 3 | 3 | 3 |
| Time | [min] | 40 | 40 | 40 | 37 |
| Temperature | [°C] | 90 | 90 | 90 | 90 |
| Pressure | [psig] | 390 | 390 | 390 | 390 |
| $H_2/C_2$ | [ppm wt. ratio] | 125 | 100 | 85 | 125 |
| 1-hexene | [g] | 0 | 6 | 15 | 10 |
| Support weight | [mg] | 300 | 300 | 300 | 300 |
| TiBAL | [mLs 1M] | 0.6 | 0.6 | 0.6 | 0.6 |
| Solid PE | [g] | 381 | 393 | 391 | 400 |

Table 2

| Sample ID # / Reactor Conditions | | 5* | 6 | 7 | 8* | 9 |
|---|---|---|---|---|---|---|
| Catalyst ID | | structure (16) | structure (16) | structure (16) | structure (16) | structure (16) |
| Catalyst weight | [mg] | 3 | 3 | 3 | 3 | 3 |
| Time | [min] | 40 | 40 | 40 | 40 | 37 |
| Temperature | [°C] | 95 | 95 | 95 | 95 | 95 |
| Pressure | [psig] | 420 | 420 | 420 | 420 | 420 |
| $H_2/C_2$ | [ppm wt. ratio] | 350 | 325 | 350 | 350 | 275 |
| 1-hexene | [g] | 0 | 4 | 4 | 0 | 10 |
| Support weight | [mg] | 300 | 300 | 300 | 300 | 300 |
| TiBAL | [mLs 1M] | 0.6 | 0.6 | 0.6 | 0.6 | 0.6 |
| Solid PE | [g] | 275 | 359 | 297 | 319 | 364 |

* Referential example

Various polymer (e.g., resin, homopolymer, copolymer, etc.) properties were assessed and the results are presented in Table 3 for samples 1, 2, 3, and 4, and in Table 4 for samples 5, 6, 7, 8, and 9 in Table 4. Each polymer sample was formed into a film by cast film obtained with a Randcastle cast film, model RC-0625-CF and the film MVTR values are also presented in Tables 3 and 4.

Table 3

| Resin Properties \ Sample ID # | | 1* | 2 | 3 | 4* |
|---|---|---|---|---|---|
| $M_n$ | [kg/mol] | 15 | 21 | 25 | 28 |
| $M_w$ | [kg/mol] | 98 | 100 | 96 | 114 |
| $M_z$ | [kg/mol] | 235 | 228 | 207 | 236 |
| $\eta_0$ | [Pa-s] | $3.8\times10^3$ | $3.6\times10^3$ | $2.8\times10^3$ | $5.8\times10^3$ |
| CY-a | | 0.53 | 0.56 | 0.58 | 0.57 |
| $\tau_\eta$ | [s] | $1.2\times10^{-2}$ | $1.1\times10^{-2}$ | $8.5\times10^{-3}$ | $1.4\times10^{-2}$ |
| Density | [g/cc] | 0.9634 | 0.9551 | 0.9496 | 0.9495 |
| Butyl branches | [#/1,000 carbons] | 0.00 | 0.58 | 1.03 | 1.01 |
| Short chain branches | [#/1,000 carbons] | 0.07 | 0.67 | 1.07 | 1.05 |
| MVTR | [g-mil/100 $in^2$/day] | 0.63 | 0.53 | 0.41 | 0.84 |

Table 4

| Resin Properties \ Sample ID # | | 5* | 6 | 7 | 8* | 9 |
|---|---|---|---|---|---|---|
| $M_n$ | [kg/mol] | 32 | 36 | 33 | 30 | 32 |
| $M_w$ | [kg/mol] | 100 | 99 | 94 | 114 | 94 |
| $M_z$ | [kg/mol] | 232 | 208 | 199 | 309 | 204 |
| $\eta_0$ | [Pa-s] | $3.2\times10^3$ | $2.9\times10^3$ | $2.5\times10^3$ | $5.0\times10^3$ | $3.5\times10^3$ |
| CY-a | | 0.46 | 0.46 | 0.48 | 0.37 | 0.44 |
| $\tau_\eta$ | [s] | $5.9\times10^{-3}$ | $3.9\times10^{-3}$ | $3.8\times10^{-3}$ | $7.2\times10^{-3}$ | $5.9\times10^{-3}$ |
| Density | [g/cc] | 0.9564 | 0.9425 | 0.9457 | 0.9556 | 0.9385 |
| Butyl branches | [#/1,000 carbons] | 0.00 | 1.55 | 1.20 | 0.00 | 3.33 |
| Short chain branches | [#/1,000 carbons] | 0.58 | 1.94 | 1.64 | 0.51 | 3.74 |
| MVTR | [g-mil/100 $in^2$/day] | 0.67 | 0.64 | 0.65 | 0.96 | 0.70 |

While a general consensus seems to be that the higher the density of a polymer film, the lower the MVTR (i.e., the better the barrier properties of such film), the data in Tables 3 and 4 indicate that there are other polymer properties that could be better indicators for the MVTR values. For example, the data from Table 3 suggests that a lower $M_z$ value and/or a lower $\eta_0$ value for a particular type of polymer could be a better indicator for a lower MVTR as opposed to the density. Samples 3 and 4 have very similar densities. However, sample 3 has an MVTR that is less than half the MVTR for sample 4, and this appears to correlate with a lower $M_z$ and also a lower $\eta_0$ for sample 3 when compared to sample 4. Further, while sample 1 has the highest density among the samples in Table 3, it does not display the lowest MVTR. Samples 2 and 3 both have lower MVTR values when compared to sample 1, and this correlates further with a lower $M_z$ and also a lower $\eta_0$ for samples 2 and 3 when compared to sample 1.

The data from Table 4 also suggests that a lower $M_z$ value and/or a lower $\eta_0$ value for a particular type of polymer could be a better indicator for a lower MVTR as opposed to the density. Sample 8 has a higher density when compared to samples 6, 7, and 9. However, sample 8 has an MVTR that is much higher than the MVTR value for samples 6, 7, and 9, and this appears to correlate with a lower $M_z$ and also a lower $\eta_0$ for samples 6, 7, and 9 when compared to sample 8.

ADDITIONAL EMBODIMENTS

The following are enumerated embodiments which are provided as non-limiting examples:

A first embodiment, which is a metallocene-catalyzed polyethylene copolymer having a zero shear viscosity ($\eta_o$) of from about $1\times10^2$ Pa-s to about $5\times10^3$ Pa-s and a ratio of a z-average molecular weight to a number average molecular weight ($M_z/M_n$) of from about 4 to about 15, and when tested in accordance with ASTM F1249 displays a moisture vapor transmission rate of less than or equal to about 0.9 g-mil/100 $in^2$/day.

A second embodiment, which is the copolymer of the first embodiment comprising an alpha olefin comonomer.

A third embodiment, which is the copolymer of any of the first through second embodiments having a short chain branching content of greater than about 0.6 short chain branches per 1,000 carbon atoms.

A fourth embodiment, which is the copolymer of any of the first through third embodiments having a $C_3$ to $C_{18}$ branching content of greater than about 0.1 $C_3$ to $C_{18}$ branches per 1,000 carbon atoms.

A fifth embodiment, which is the copolymer of any of the first through fourth embodiments wherein the alpha olefin comonomer comprises 1-hexene, 1-octene, or combinations thereof.

A sixth embodiment, which is the copolymer of any of the first through fifth embodiments wherein the alpha olefin comonomer comprises 1-hexene.

A seventh embodiment, which is the copolymer of any of the first through sixth embodiments having a butyl branching content of greater than about 0.1 butyl branches per 1,000 carbon atoms.

An eighth embodiment, which is the copolymer of any of the first through seventh embodiments having a density of less than about 0.965 g/cc.

A ninth embodiment, which is the copolymer of any of the first through eighth embodiments having a molecular weight distribution ($M_w/M_n$) of from about 2 to about 6.

A tenth embodiment, which is the copolymer of any of the first through ninth embodiments having a ratio of the z-average molecular weight to a weight average molecular weight ($M_z/M_w$) of from about 1.7 to about 2.7.

An eleventh embodiment, which is the copolymer of any of the first through tenth embodiments having a weight average molecular weight ($M_w$) of from about 10 kg/mol to about 135 kg/mol.

A twelfth embodiment, which is the copolymer of any of the first through eleventh embodiments having a z-average molecular weight ($M_z$) of from about 25 kg/mol to about 260 kg/mol.

A thirteenth embodiment, which is the copolymer of any of the first through the twelfth embodiments having a viscous relaxation time ($\tau_\eta$) of less than about $1.3\times10^{-2}$ seconds.

A fourteenth embodiment, which is the copolymer of any of the first through thirteenth embodiments having a number average molecular weight ($M_n$) of from about 2 kg/mol to about 60 kg/mol.

A fifteenth embodiment, which is the copolymer of any of the first through fourteenth embodiments having a zero shear viscosity of from about $5\times10^2$ Pa-s about $4.5\times10^3$ Pa-s.

A sixteenth embodiment, which is the copolymer of any of the first through fifteenth embodiments having a density of less than about 0.962 g/cc.

A seventeenth embodiment, which is the copolymer of any of the first through sixteenth embodiments having a melt index ($I_{2.16}$) of greater than about 0.8 g/10 min as determined in accordance with ASTM D1238.

An eighteenth embodiment, which is the copolymer of any of the first through seventeenth embodiments having a CY-a parameter of greater than about 0.4.

A nineteenth embodiment, which is a film made from the copolymer of any of the first through eighteenth embodiments.

A twentieth embodiment, which is a food packaging container comprising the film of the nineteenth embodiment.

A twenty-first embodiment, which is the copolymer of any of the first through eighteenth embodiments wherein the metallocene catalyst comprises a bridged metallocene compound.

A twenty-second embodiment, which is the copolymer of any of the first through the twenty-first embodiments wherein the metallocene catalyst comprises an unbridged metallocene compound.

A twenty-third embodiment, which is the copolymer of any of the first through the twenty-second embodiments wherein the metallocene catalyst comprises a single metallocene compound and an activator-support further comprising a chemically-treated solid oxide support.

A twenty-fourth embodiment, which is a metallocene-catalyzed polyethylene copolymer which when tested in accordance with ASTM F1249 has a moisture vapor transmission rate (MVTR) that is decreased by at least 5% when compared to an MVTR determined in accordance with ASTM F1249 of an otherwise similar metallocene-catalyzed polyethylene homopolymer.

The embodiments and examples described herein are exemplary only, and are not intended to be limiting. Many variations and modifications of the invention disclosed herein are possible and are within the scope of the invention. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). Use of the term "optionally" with respect to any element of a claim is intended to mean that the subject element is required, or alternatively, is not required. Both alternatives are intended to be within the scope of the claim. Use of broader terms such as comprises,

includes, having, etc. should be understood to provide support for narrower terms such as consisting of, consisting essentially of, comprised substantially of, etc.

Accordingly, the scope of protection is not limited by the description set out above but is only limited by the claims which follow, that scope including all equivalents of the subject matter of the claims. Each and every claim is incorporated into the specification as an embodiment of the present invention. Thus, the claims are a further description and are an addition to the detailed description of the present invention. The disclosures of all patents, patent applications, and publications cited herein are hereby incorporated by reference, to the extent that they provide exemplary, procedural or other details supplementary to those set forth herein.

## Claims

1. A metallocene-catalyzed polyethylene copolymer comprising an alpha olefin comonomer, having a short chain branching content of greater than 0.6 short chain branches per 1,000 carbon atoms, a melt index ($I_{2.16}$) of greater than 0.8 g/10 min as determined in accordance with ASTM D1238, a zero shear viscosity ($\eta_0$) of from 1 x $10^2$ Pa-s to 4 x $10^3$ Pa-s, a ratio of the z-average molecular weight to a weight average molecular weight ($M_z/M_w$) of from 1.9 to 2.7 and a ratio of a z-average molecular weight to a number average molecular weight ($M_z/M_n$) of from 4 to 15, and which when tested in accordance with ASTM F1249 displays a moisture vapor transmission rate of less than or equal to 3.54 x $10^{-7}$ kg/m/day (0.9 g-mil/100 $in^2$/day).

2. The copolymer of Claim 1, wherein the copolymer has a $C_3$ to $C_{18}$ branching content of greater than 0.6 $C_3$ to $C_{18}$ branches per 1,000 carbon atoms.

3. The copolymer of Claim 2 wherein the alpha olefin comonomer comprises 1-hexene, 1-octene, or combinations thereof.

4. The copolymer of Claim 2 wherein the alpha olefin comonomer comprises 1-hexene.

5. The copolymer of any one of the preceding claims having a butyl branching content of greater than 0.6 butyl branches per 1,000 carbon atoms.

6. The copolymer of any one of the preceding claims having a density of less than 0.962 g/cc.

7. The copolymer of any one of the preceding claims having: a molecular weight distribution ($M_w/M_n$) of from 2 to 6; a weight average molecular weight ($M_w$) of from 10 kg/mol to 135 kg/mol; a z-average molecular weight ($M_z$) of from 25 kg/mol to 260 kg/mol; a viscous relaxation time ($\tau_\eta$) of less than 1.3 x $10^{-2}$ seconds; and/or a number average molecular weight ($M_n$) of from 2 kg/mol to 60 kg/mol.

8. The copolymer of any one of the preceding claims having a zero shear viscosity of from 5 x $10^2$ Pa-s to 4 x $10^3$ Pa-s.

9. The copolymer of any one of the preceding claims having a CY-a parameter of greater than 0.4.

10. A film made from the copolymer of any one of the preceding claims.

11. A food packaging container comprising the film of Claim 10.

12. The copolymer of any one of Claims 1 to 9 wherein the metallocene catalyst comprises a bridged metallocene compound.

13. The copolymer of any one of Claims 1 to 9 wherein the metallocene catalyst comprises an unbridged metallocene compound.

14. The copolymer of any one of Claims 1 to 9 wherein the metallocene catalyst comprises a single metallocene compound and an activator-support further comprising a chemically-treated solid oxide support.

15. A metallocene-catalyzed polyethylene copolymer as claimed in Claim 1 which when tested in accordance with ASTM F1249 has a moisture vapor transmission rate (MVTR) that is decreased by at least 5% when compared to an MVTR determined in accordance with ASTM F1249 of an otherwise similar metallocene-catalyzed polyethylene homopolymer.

## Patentansprüche

1. Metallocen-katalysiertes Polyethylen-Copolymer, das ein Alpha-Olefin-Comonomer umfasst, das einen Gehalt an kurzkettigen Verzweigungen von über 0,6 kurzkettigen Verzweigungen pro 1000 Kohlenstoffatome, einem Schmelzindex ($I_{2.16}$) von über 0,8 g/10 min, wie nach ASTM D1238 bestimmt, einer Null-Scherviskosität ($\eta_0$) von 1 x $10^2$ Pa-s bis 4 x $10^3$ Pa-s, einem Verhältnis der z-mittleren Molekularmasse zu einer gewichtsmittleren Molekularmasse ($M_z/M_w$) von 1,9 bis 2,7 und einem Verhältnis der z-mittleren Molekularmasse zu einer zahlenmittleren Molekularmasse ($M_z/M_n$) von 4 bis 15 aufweist, und das bei Prüfung nach ASTM F1249 eine Wasserdampfdurchlässigkeitsrate von höchstens 3,54 x $10^{-7}$ kg/m/Tag (0,9 g-mil/100 $in^2$/Tag) anzeigt.

2. Copolymer nach Anspruch 1, wobei das Copolymer einen Gehalt an $C_3$- bis $C_{18}$-Verzweigungen von über 0,1 $C_3$- bis $C_{18}$-Verzweigungen pro 1000 Kohlenstoffatome aufweist.

3. Copolymer nach Anspruch 2, wobei das Alpha-Olefin-Comonomer 1-Hexen, 1-Octen oder Kombinationen davon umfasst.

4. Copolymer nach Anspruch 2, wobei das Alpha-Olefin-Comonomer 1-Hexen umfasst.

5. Copolymer nach einem der vorhergehenden Ansprüche, das einen Gehalt an Butylverzweigungen von über 0,6 Butylverzweigungen pro 1000 Kohlenstoffatome aufweist.

6. Copolymer nach einem der vorhergehenden Ansprüche, das eine Dichte von weniger als 0,962 g/$cm^3$ aufweist.

7. Copolymer nach einem der vorhergehenden Ansprüche, das Folgendes aufweist:

   eine Molekularmasseverteilung ($M_w/M_n$) von 2 bis 6;
   eine gewichtsmittlere Molekularmasse ($M_w$) von 10 kg/mol bis 135 kg/mol;
   eine z-mittlere Molekularmasse ($M_z$) von 25 kg/mol bis 260 kg/mol;
   eine Viskose-Relaxationszeit ($\tau_\eta$) von weniger als 1,3 x $10^{-2}$ Sekunden; und/oder eine zahlenmittlere Molekularmasse ($M_n$) von 2 kg/mol bis 60 kg/mol.

8. Copolymer nach einem der vorhergehenden Ansprüche, das eine Null-Scherviskosität von 5 x $10^2$ Pa-s bis 4 x $10^3$ Pa-s aufweist.

9. Copolymer nach einem der vorhergehenden Ansprüche, das einen CY-a-Parameter über 0,4 aufweist.

10. Folie, die aus dem Copolymer nach einem der vorhergehenden Ansprüche hergestellt ist.

11. Lebensmittelverpackungsbehälter, der die Folie nach Anspruch 10 umfasst.

12. Copolymer nach einem der Ansprüche 1 bis 9, wobei der Metallocenkatalysator eine verbrückte Metallocenverbindung umfasst.

13. Copolymer nach einem der Ansprüche 1 bis 9, wobei der Metallocenkatalysator eine unverbrückte Metallocenverbindung umfasst.

14. Copolymer nach einem der Ansprüche 1 bis 9, wobei der Metallocenkatalysator eine einzelne Metallocenverbindung und einen Aktivatorträger umfasst, der ferner einen chemisch behandelten festen Oxidträger umfasst.

15. Metallocen-katalysiertes Polyethylen-Copolymer nach Anspruch 1, das bei Prüfung nach ASTM F1249 eine Wasserdampfdurchlässigkeitsrate (WVTR) aufweist, die im Vergleich zu einer nach ASTM F1249 bestimmten WVTR eines ansonsten ähnlichen Metallocen-katalysierten Polyethylen-Homopolymers um wenigstens 5 % verringert ist.

## Revendications

1. Copolymère de polyéthylène catalysé par un métallocène comprenant un comonomère alpha-oléfinique, ayant une teneur en ramifications à chaîne courte supérieure à 0,6 ramification à chaîne courte pour 1 000 atomes de carbone, un indice de fusion ($I_{2,16}$) supérieur à 0,8 g/10 min tel que déterminé conformément à la norme ASTM D1238, un coefficient de viscosité de cisaillement nul ($\eta_0$) de 1 x $10^2$ Pa-s à 4 x $10^3$ Pa-s, un rapport poids moléculaire à moyenne z sur poids moléculaire moyen en poids ($M_z/M_w$) de 1,9 à 2,7 et un rapport poids moléculaire à moyenne z sur poids moléculaire moyen en nombre ($M_z/M_n$) de 4 à 15, et qui, lorsqu'il est testé conformément à la norme ASTM F1249, affiche un taux de transmission de vapeur d'eau inférieur ou égal à 3,54 x $10^{-7}$ kg/m/jour (0,9 g-mil/100 po$^2$/jour).

2. Copolymère selon la revendication 1, dans lequel le copolymère a une teneur en ramifications en $C_3$ à $C_{18}$ supérieure à 0,1 ramification en $C_3$ à $C_{18}$ pour 1 000 atomes de carbone.

3. Copolymère selon la revendication 2, dans lequel le comonomère alpha-oléfinique comprend du 1-hexène, du 1-octène ou des combinaisons de ceux-ci.

4. Copolymère selon la revendication 2, dans lequel le comonomère alpha-oléfinique comprend du 1-hexène.

5. Copolymère selon l'une quelconque des revendications précédentes, ayant une teneur en ramifications butyle supérieure à 0,6 ramification butyle pour 1 000 atomes de carbone.

6. Copolymère selon l'une quelconque des revendications précédentes, ayant une densité inférieure à 0,962 g/cc.

7. Copolymère selon l'une quelconque des revendications précédentes, ayant : une distribution de poids moléculaire ($M_w/M_n$) de 2 à 6 ; un poids moléculaire moyen en poids ($M_w$) de 10 kg/mol à 135 kg/mol; un poids moléculaire à moyenne z ($M_z$) de 25 kg/mol à 260 kg/mol ; un temps de relaxation visqueuse ($\tau_\eta$) inférieur à 1,3 x $10^{-2}$ secondes ; et/ou une masse moléculaire moyenne en nombre ($M_n$) de 2 kg/mol à 60 kg/mol.

8. Copolymère selon l'une quelconque des revendications précédentes, ayant un coefficient de viscosité de cisaillement nul de 5 x $10^2$ Pa-s à 4 x $10^3$ Pa-s.

9. Copolymère selon l'une quelconque des revendications précédentes, ayant un paramètre CY-a supérieur à 0,4.

10. Film fabriqué à partir du copolymère selon l'une quelconque des revendications précédentes.

11. Récipient d'emballage alimentaire comprenant le film selon la revendication 10.

12. Copolymère selon l'une quelconque des revendications 1 à 9, dans lequel le catalyseur au métallocène comprend un composé métallocène ponté.

13. Copolymère selon l'une quelconque des revendications 1 à 9, dans lequel le catalyseur au métallocène comprend un composé métallocène non ponté.

14. Copolymère selon l'une quelconque des revendications 1 à 9, dans lequel le catalyseur au métallocène comprend un seul composé métallocène et un support activateur comprenant en outre un support oxyde solide traité chimiquement.

15. Copolymère de polyéthylène catalysé par un métallocène selon la revendication 1 qui, lorsqu'il est testé conformément à la norme ASTM F1249, a un taux de transmission de vapeur d'eau (MVTR) qui est diminué d'au moins 5 % par rapport à un MVTR déterminé conformément à la norme ASTM F1249 d'un autre homopolymère de polyéthylène catalysé par métallocène similaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61989858
- US 3248179 A
- US 4501885 A
- US 5565175 A
- US 5575979 A
- US 6239235 B
- US 6262191 B
- US 6833415 B
- US 5455314 A
- US 4588790 A
- US 5352749 A
- US 5436304 A
- US 7064225 B
- US 7226886 B
- US 7312283 B
- US 7517939 B
- US 7884163 B
- US 6107230 A
- US 6165929 A
- US 6294494 B
- US 6300271 B
- US 6316553 B
- US 6355594 B
- US 6376415 B
- US 6388017 B
- US 6391816 B
- US 6395666 B
- US 6524987 B
- US 6548441 B
- US 6548442 B
- US 6576583 B
- US 6613712 B
- US 6632894 B
- US 6667274 B
- US 6750302 B
- US 4452910 A
- US 5376611 A
- US 4060480 A


### Non-patent literature cited in the description


- Hawley's Condensed Chemical Dictionary. John Wiley & Sons, 1995
- **COTTON, F.A. ; WILKINSON, G. ; MURILLO, C. A. ; BOCHMANN, M.** Advanced Inorganic Chemistry. Wiley-Interscience, 1999
- **T.J. PINNAVAIA.** *Science,* 1983, vol. 220 (4595), 365-371
- **J.M. THOMAS.** Intercalation Chemistry. Academic Press, Inc, 1972, 55-99
- NMR and Macromolecules. **RANDALL, J. C. ; HSIEH, E. T.** Sequence, Dynamic, and Domain Structure, ACS Symposium Series. American Chemical Society, 1984, vol. 247
- **C. A. HIEBER ; H. H. CHIANG.** *Rheol. Acta,* 1989, vol. 28, 321
- **C.A. HIEBER ; H.H. CHIANG.** *Polym. Eng. Sci.,* 1992, vol. 32, 931
- Dynamics of Polymeric Liquids. **R. B. BIRD ; R. C. ARMSTRONG ; O. HASSEGER.** Fluid Mechanics. John Wiley & Sons, 1987, vol. 1